# EUROPEAN PATENT APPLICATION

(11) **EP 4 527 550 A1**
(43) Date of publication of application: **26.03.2025**
(21) Application number: 22964427.3
(22) Date of filing: 02.11.2022
(51) Int. Cl.: B23Q 15/00, B23Q 17/00, G05B 19/4063, B23Q 15/12

(54) **NUMERIC VALUE CONTROL DEVICE, MACHINE TOOL, METHOD FOR CONTROLLING ELECTRIC POWER CONSUMED BY MACHINE TOOL, PROGRAM, AND COMPUTER-READABLE STORAGE MEDIUM**

(71) Applicant: Yamazaki Mazak Corporation, Niwa-gun, Aichi 480-0197 (JP)
(72) Inventor: ITO, Genta, Niwa-gun, Aichi 480-0197 (JP); UEDA, Shota, Niwa-gun, Aichi 480-0197 (JP); MATSUZAWA, Hiroaki, Niwa-gun, Aichi 480-0197 (JP); MATSUI, Jun, Niwa-gun, Aichi 480-0197 (JP); SUMIDA, Yasuharu, Niwa-gun, Aichi 480-0197 (JP); KATAYAMA, Takuro, Niwa-gun, Aichi 480-0197 (JP); KOIKE, Shunsuke, Niwa-gun, Aichi 480-0197 (JP)
(74) Representative: TBK
(86) International application number: PCT/JP2022/041048
(87) International publication number: WO 2024/095409

(57) **Abstract**

A control method of power consumption of a machine tool includes: displaying, as an initial power value, the power consumption to be consumed by each of at least one piece of equipment provided in the machine tool, while the machine tool is in operation; receiving an input for selecting intended equipment, the power consumption of which is to be changed from the initial power value, from the at least one piece of equipment; receiving an input of a drive parameter for changing the power consumption of the intended equipment; and controlling the intended equipment, based on the drive parameter.

## Description

### Technical Field

The present invention relates to a numerical controller, a machine tool, a control method of power consumption of the machine tool, a program, and a computer-readable storage medium.

### Background Art

Techniques in Patent Literature 1 and Patent Literature 2 are known for reducing power consumption of a machine tool. Patent Literature 1 discloses a technique for reducing the power consumption by switching between ON and OFF of various pieces of equipment, based on whether an operator is present in front of the machine tool or the machine tool is in automatic operation. Patent Literature 2 discloses a technique for reducing the power consumption by turning off an unnecessary power supply, when the machine tool is suspended.

### Citation List

### Patent Literature

PTL1: JP 2016-048449 A.
PTL2: JP 2001-277071 A.

### Summary of Invention

### Technical Problem

In the technique in Patent Literature 1, it is not possible to set the power consumption for every piece of equipment, and the power consumption cannot be reduced precisely. In the technique in Patent Literature 2, it is simply possible to turn off a power supply that does not have to be started when the machine tool is suspended, it is not possible to select equipment to be turned off, and precise control including reduction of an unnecessary power supply cannot be conducted, while the machine tool is in operation.

It is an object of the technique disclosed in the present application is to provide a numerical controller, a machine tool, a control method of power consumption of the machine tool, a program, and a computer-readable storage medium, which enable precise settings of the power consumption for every piece of equipment, and which enable reduction in the power consumption precisely.

### Solution to Problem

A control method of power consumption of a machine tool according to a first embodiment of the present disclosure includes displaying, as an initial power value, the power consumption to be consumed by each of at least one piece of equipment provided in the machine tool, while the machine tool is in operation, receiving an input for selecting intended equipment, the power consumption of which is to be changed from the initial power value, from the at least one piece of equipment, receiving an input of a drive parameter for changing the power consumption of the intended equipment, and controlling the intended equipment, based on the drive parameter.

According to a second embodiment of the present disclosure, the control method according to the first embodiment further includes receiving an input for selecting an intended program to be set from a plurality of machining programs executable in the machine tool. The power consumption is electric power to be consumed when each of the at least one piece of equipment executes the intended program. It is to be noted that in the control method according to the second embodiment, the intended program is desirably performed.

According to a third embodiment of the present disclosure, the control method according to the second embodiment further includes receiving an input for selecting at least one machining process from a plurality of machining processes included in the intended program. Controlling the intended equipment includes controlling the intended equipment in the at least one machining process, based on the drive parameter. It is to be noted that the at least one machining process is desirably either the machining process that is being performed while the intended program is being executed or all the machining processes of the intended program.

According to a fourth embodiment of the present disclosure, the control method according to the second embodiment further includes receiving a program application instruction to apply the drive parameter to the intended program, and upon receipt of the program application instruction, storing, in a memory, a correspondence relationship between the intended equipment and an output of the intended equipment corresponding to the drive parameter or between the intended equipment and the drive parameter in association with the intended program.

According to a fifth embodiment of the present disclosure, the control method according to the third embodiment further includes receiving a program application instruction to apply the drive parameter to the intended program, and upon receipt of the program application instruction, storing, in a memory, a correspondence relationship between the intended equipment and an output of the intended equipment corresponding to the drive parameter or between the intended equipment and the drive parameter in association with the at least one machining process of the intended program.

According to a sixth embodiment of the present disclosure, the control method according to the fourth embodiment or the fifth embodiment further includes controlling the intended equipment to achieve a target power value of the power consumption corresponding to the drive parameter, when the intended program associated with the correspondence relationship starts.

According to a seventh embodiment of the present disclosure, the control method according to one of the first embodiment to the sixth embodiment further includes displaying a target power value of the power consumption corresponding to the drive parameter.

According to an eighth embodiment of the present disclosure, the control method according to the seventh embodiment further includes displaying an initial output value representing an output of the intended equipment corresponding to the initial power value and a target output value representing an output of the intended equipment corresponding to the target power value.

According to a ninth embodiment of the present disclosure, in the control method according to the seventh embodiment or the eighth embodiment, controlling the intended equipment, based on the drive parameter, includes receiving a control instruction to control the intended equipment, based on the drive parameter, and upon receipt of the control instruction, controlling the intended equipment, based on the drive parameter.

According to a tenth embodiment of the present disclosure, in the control method according to one of the first embodiment to the ninth embodiment, receiving the input of the drive parameter includes receiving an input for selecting, from a plurality of candidate ratios, a ratio of the target output value to a reference value out of values each representing an output of the intended equipment. It is to be noted that the reference value is preferably an output of the intended equipment when the intended equipment operates at the rated power consumption.

According to an eleventh embodiment of the present disclosure, in the control method according to one of the first embodiment to the tenth embodiment, the at least one piece of equipment includes at least one of a first actuator configured to drive a pump for supplying a nozzle of the machine tool with a coolant, a second actuator configured to drive a pump for supplying a heat exchanger with the coolant reserved in a coolant tank, a third actuator configured to drive a chip conveyor of the machine tool, and a fourth actuator configured to drive a fan for discharging mist accumulated in a machine body of the machine tool.

According to a twelfth embodiment of the present disclosure, in the control method according to the eleventh embodiment, a value representing an output of the intended equipment includes one of a discharge amount per unit time of the coolant obtained from either an operation frequency or a rotational speed of the first actuator, a supply amount per unit time of the coolant obtained from either an operation frequency or a rotational speed of the second actuator, a belt speed of the chip conveyor, and a working period of the fourth actuator per unit time, or either an operation frequency or a rotational speed of the fourth actuator.

A numerical controller according to a thirteenth embodiment of the present disclosure includes a means for performing the control method according to one of the first embodiment to the twelfth embodiment. Preferably, the numerical controller includes the memory according to the fourth embodiment, and an electronic circuit such as a hardware processor configured to perform the control method according to one of the first embodiment to the twelfth embodiment. It is to be noted that the apparatus according to the thirteenth embodiment may be a computer or a computer system, instead of the numerical controller. The computer system is intended to mean an aggregation of a plurality of computers for processing at least a part of the means for performing the control method according to any one of the first embodiment to the twelfth embodiment.

A machine tool according to a fourteenth embodiment of the present disclosure includes the numerical controller according to the thirteenth embodiment, an input interface configured to receive the input for selecting the intended equipment, and to receive the input of the drive parameter, a display configured to display the initial power value, and the at least one piece of equipment. It is to be noted that the input interface desirably further receives ab input for selecting the intended program, an input for selecting at least one machining process, and an input for selecting the ratio of the target output value from the plurality of candidate ratios. The display desirably further displays the target power value, the initial output value, and the target output value.

A program according to a fifteenth embodiment of the present disclosure includes an instruction to cause a hardware processor to perform processing of the control method according to one of the first embodiment to the twelfth embodiment, while the hardware processor is in operation.

A computer-readable storage medium according to a sixteenth embodiment of the present disclosure includes an instruction to cause a hardware processor to perform processing of the control method according to one of the first embodiment to the twelfth embodiment.

In the control method according to the first embodiment, the numerical controller according to the thirteenth embodiment including the means for performing processing of the control method according to the first embodiment, the machine tool including the numerical controller, the program including an instruction to cause the hardware processor to perform the processing of the control method according to the first embodiment, and the computer-readable storage medium including the instruction to cause the hardware processor to perform the processing of the control method according to the first embodiment, the initial power value of each of the at least one piece of equipment is displayed, so the operator is able to easily consider the equipment that necessitates a change in power consumption. In addition, the input for selecting the intended equipment and the input of the drive parameter related to the power consumption of the intended equipment are received, and precise reduction in the power consumption is enabled for every piece of equipment.

In the control method according to the second embodiment, the numerical controller according to the thirteenth embodiment including the means for performing processing of the control method according to the second embodiment, the machine tool including the numerical controller, the program including an instruction to cause the hardware processor to perform the processing of the control method according to the second embodiment, and the computer-readable storage medium including the instruction to cause the hardware processor to perform the processing of the control method according to the second embodiment, the input for selecting the intended program is received, so that it becomes possible to change the setting of the power consumption for every machining program, and precise reduction in the power consumption is further enabled.

In the control method according to the third embodiment, the numerical controller according to the thirteenth embodiment including the means for performing processing of the control method according to the third embodiment, the machine tool including the numerical controller, the program including an instruction to cause the hardware processor to perform the processing of the control method according to the third embodiment, and the computer-readable storage medium including the instruction to cause the hardware processor to perform the processing of the control method according to the third embodiment, it becomes possible to set the power consumption for a specific machining process of the machining program, and precise reduction in the power consumption is further enabled.

In the control method according to the fourth embodiment, the numerical controller according to the thirteenth embodiment including the means for performing processing of the control method according to the fourth embodiment, the machine tool including the numerical controller, the program including an instruction to cause the hardware processor to perform the processing of the control method according to the fourth embodiment, and the computer-readable storage medium including the instruction to cause the hardware processor to perform the processing of the control method according to the fourth embodiment, it becomes possible to rewrite the intended program to include the intended equipment and its driver parameter, and a processor that executes the intended program is capable of reading the intended equipment related to the intended program and its drive parameter.

In the control method according to the fifth embodiment, the numerical controller according to the thirteenth embodiment including the means for performing processing of the control method according to the fifth embodiment, the machine tool including the numerical controller, the program including an instruction to cause the hardware processor to perform the processing of the control method according to the fifth embodiment, and the computer-readable storage medium including the instruction to cause the hardware processor to perform the processing of the control method according to the fifth embodiment, it becomes possible to rewrite a description part, in which processing of at least one machining process of the intended program is described, to include the intended equipment and its driver parameter, and a processor that performs the at least one machining process is capable of reading the intended equipment related to the at least one machining process and its drive parameter.

In the control method according to the sixth embodiment, the numerical controller according to the thirteenth embodiment including the means for performing processing of the control method according to the sixth embodiment, the machine tool including the numerical controller, the program including an instruction to cause the hardware processor to perform the processing of the control method according to the sixth embodiment, and the computer-readable storage medium including the instruction to cause the hardware processor to perform the processing of the control method according to the sixth embodiment, in a case where the setting in the fourth embodiment or the fifth embodiment is made, and then when the intended program is started, the intended equipment is controlled to achieve the target power value, thereby facilitating the setting of the power consumption of the intended program.

In the control method according to the seventh embodiment, the numerical controller according to the thirteenth embodiment including the means for performing processing of the control method according to the seventh embodiment, the machine tool including the numerical controller, the program including an instruction to cause the hardware processor to perform the processing of the control method according to the seventh embodiment, and the computer-readable storage medium including the instruction to cause the hardware processor to perform the processing of the control method according to the seventh embodiment, it becomes possible to determine whether the intended equipment is to be controlled, based on the driver parameter, and how much the power consumption is reduced is presented to the operator, thereby facilitating the setting of the drive parameter.

In the control method according to the eighth embodiment, the numerical controller according to the thirteenth embodiment including the means for performing processing of the control method according to the eighth embodiment, the machine tool including the numerical controller, the program including an instruction to cause the hardware processor to perform the processing of the control method according to the eighth embodiment, and the computer-readable storage medium including the instruction to cause the hardware processor to perform the processing of the control method according to the eighth embodiment, it becomes possible to set the driver parameter, while the operator is looking at a decrease in the output of the intended equipment due to the reduction in the power consumption, thereby facilitating the setting of the drive parameter.

In the control method according to the ninth embodiment, the numerical controller according to the thirteenth embodiment including the means for performing processing of the control method according to the ninth embodiment, the machine tool including the numerical controller, the program including an instruction to cause the hardware processor to perform the processing of the control method according to the ninth embodiment, and the computer-readable storage medium including the instruction to cause the hardware processor to perform the processing of the control method according to the ninth embodiment, the operator is able to check a changed state of the power consumption and control the intended equipment, so the convenience of the operator is improved.

In the control method according to the tenth embodiment, the numerical controller according to the thirteenth embodiment including the means for performing processing of the control method according to the tenth embodiment, the machine tool including the numerical controller, the program including an instruction to cause the hardware processor to perform the processing of the control method according to the tenth embodiment, and the computer-readable storage medium including the instruction to cause the hardware processor to perform the processing of the control method according to the tenth embodiment, it becomes possible to display the effect of reducing the power consumption for the operator in an easy-to-understand manner. In addition, the input is received by narrowing down into the plurality of candidate ratios, so the operator is able to easily remember the setting information, and is able to easily apply the setting information to another machining. Thus, the convenience of the operator is improved.

In the control method according to the eleventh embodiment, the numerical controller according to the thirteenth embodiment including the means for performing processing of the control method according to the eleventh embodiment, the machine tool including the numerical controller, the program including an instruction to cause the hardware processor to perform the processing of the control method according to the eleventh embodiment, and the computer-readable storage medium including the instruction to cause the hardware processor to perform the processing of the control method according to the eleventh embodiment, the actuator that controls the equipment to be used incidentally in the machining is controlled, so the operator is able to selectively reduce the power consumption without affecting the machining speed.

In the control method according to the twelfth embodiment, the numerical controller according to the thirteenth embodiment including the means for performing processing of the control method according to the twelfth embodiment, the machine tool including the numerical controller, the program including an instruction to cause the hardware processor to perform the processing of the control method according to the twelfth embodiment, and the computer-readable storage medium including the instruction to cause the hardware processor to perform the processing of the control method according to the twelfth embodiment, unlike a direct output of the actuator, the output is displayed in a parameter that directly influences the environment in which the machining operation is performed, so the operator is able to easily speculate the influence of a decrease in the output.

### Effects of Invention

According to the technique disclosed in the present application, an initial power value of each of at least one piece of equipment is displayed, so an operator easily considers equipment that necessitates a change in power consumption. In addition, an input for selecting intended equipment and an input of a drive parameter related to the power consumption of the intended equipment are received, and thus precise reduction in the power consumption is enabled for every piece of equipment.

### Brief Description of Drawings

[FIG. 1] FIG. 1 is a configuration diagram of a machine tool according to an embodiment, illustrating a schematic configuration of the machine tool.
[FIG. 2] FIG. 2 is a block diagram of a hardware configuration of the machine tool according to an embodiment.
[FIG. 3] FIG. 3 is an illustration of data types and values stored as equipment setting data in a table format.
[FIG. 4] FIG. 4 is an example of a common unit of a machining program.
[FIG. 5] FIG. 5 is an example of a machining unit of the machining program.
[FIG. 6] FIG. 6 is a setting example of energy saving levels of external devices to be set for every machining program in an EIA/ISO format.
[FIG. 7] FIG. 7 is an example of the program in the EIA/ISO format, in a case where the energy saving level is set for every machining process.
[FIG. 8] FIG. 8 is another example of the program in the EIA/ISO format, in the case where the energy saving level is set for every machining process.
[FIG. 9] FIG. 9 is a flowchart of a processing flow in a method for executing a machining program of an interactive type of the machine tool.
[FIG. 10] FIG. 10 is a flowchart of a processing flow in step S20 in FIG. 9.
[FIG. 11] FIG. 11 is a flowchart of a processing flow in a method for executing the program in the EIA/ISO format of the machine tool.
[FIG. 12] FIG. 12 is a flowchart of a processing flow in step S40 in FIG. 11.
[FIG. 13] FIG. 13 illustrates an example of a selection interface of the machining program.
[FIG. 14] FIG. 14 illustrates an example of a main screen of an interface for changing equipment setting data.
[FIG. 15] FIG. 15 illustrates an example of a setting change interface of a first pump.
[FIG. 16] FIG. 16 illustrates an example of a setting change interface of a second pump.
[FIG. 17] FIG. 17 illustrates an example of a setting change interface of a chip collector.
[FIG. 18] FIG. 18 illustrates an example of a setting change interface of a mist collector.
[FIG. 19] FIG. 19 illustrates another example of the setting change interface of the first pump.
[FIG. 20] FIG. 20 illustrates another example of the setting change interface of the mist collector.
[FIG. 21] FIG. 21 is a flowchart of a processing flow in a control method of power consumption of the machine tool.
[FIG. 22] FIG. 22 is an example of a selection interface of the machining unit.
[FIG. 23] FIG. 23 is another example of the main screen of the interface for changing the equipment setting data.
[FIG. 24] FIG. 24 is an example of the setting change interface of the first pump.
[FIG. 25] FIG. 25 is an example of the setting change interface of the second pump.
[FIG. 26] FIG. 26 is an example of the setting change interface of the chip collector.
[FIG. 27] FIG. 27 is an example of the setting change interface of the mist collector. Description of Embodiments

The present invention will now be described with reference to the accompanying drawings, wherein like reference numerals designate corresponding or identical elements throughout the various drawings.

### <Embodiments>

### <Configuration of Mahine Tool 1>

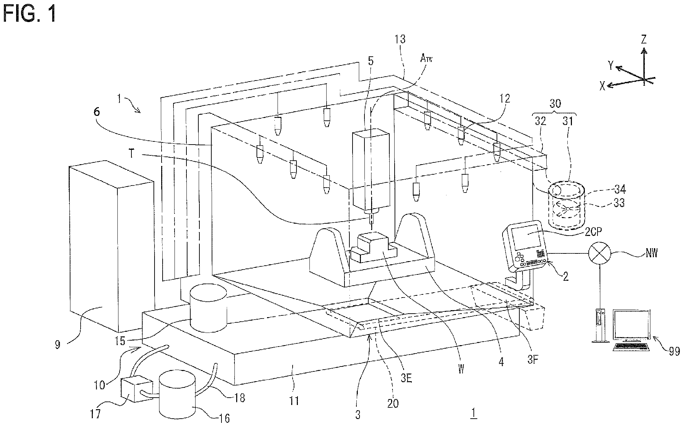

FIG. 1 is a block diagram of a machine tool system 100 including a machine tool 1 according to an embodiment of the present invention, illustrating a configuration of the machine tool system 100. The machine tool system 100 includes the machine tool 1, and a computer 99 to be connected with the machine tool 1 through a network NW. The computer 99 may be a general-purpose computer including electronic circuits such as a hardware processor and a memory. The computer 99 is used for creating a machining program for use in the machine tool 1. The network NW may be a wired network such as an intranet, or may be a wireless network such as a wireless LAN.

The machine tool 1 includes: a numerical controller 2; a platform 3; a table 4, on which a workpiece W is placed; a spindle unit 5, to which a tool T is attached; a housing 6; a distribution board 9; a coolant supplier 10; a chip collector 20, and a mist collector 30. The machine tool 1 includes a spindle mover, not illustrated, for holding the spindle unit 5 and moving the spindle unit 5 in X-axis, Y-axis, and Z-axis directions of FIG. 1. The machine tool 1 includes a table mover, not illustrated, for moving the table 4 in X-axis and Y-axis directions of FIG. 1. The numerical controller 2 controls the spindle mover and the table mover to control the tool T to rotate. The housing 6 covers a machining area defined by moving ranges of the spindle mover and the table mover. In FIG. 1, for convenience of description, walls on the near side of the housing 6 (in a positive direction of X axis and a negative direction of Y axis of the table 4 and the spindle unit 5 in the drawing) are indicated in dashed lines, and its inside is indicated in solid lines.

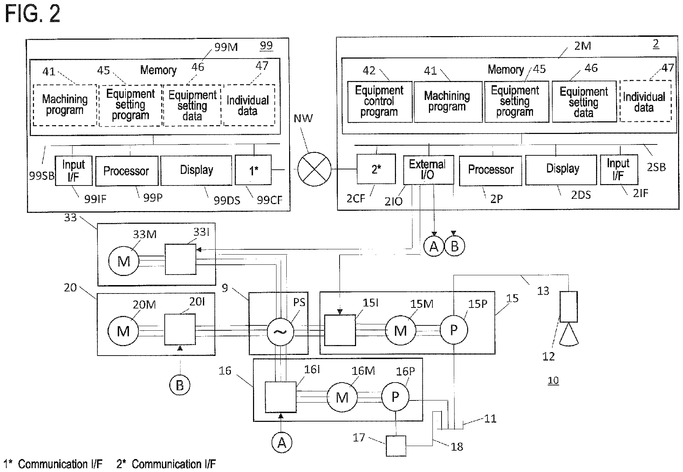

The numerical controller 2 includes an electronic circuit such as an electronic control unit, and includes an information processing means such as a hardware processor 2P, and a storage means such as a memory 2M (see FIG. 2). The numerical controller 2 includes a control panel 2CP, such as a touch panel display, which allows an operator to input and output information. The touch panel of the control panel 2CP may be referred to as an input interface 21F, and the display of the control panel 2CP may be referred to as a display 2DS. It is to be noted that the numerical controller 2 may further include the input interface 21F, such as a button or a dial, in addition to the touch panel.

The distribution board 9 supplies the numerical controller 2, the coolant supplier 10, the chip collector 20, and the mist collector 30 with electricity. The machine tool 1 machines the workpiece W, which is placed on the table 4, with the tool T, which is attached to a tip end of the spindle unit 5. Here, Z axis is defined as an axis along a tool rotation axis A_{TW}, Y axis is defined as an axis along an upper surface of the platform 3 and perpendicular to Z axis, and X axis is defined as an axis perpendicular to Y axis and Z axis.

The coolant supplier 10 includes: a coolant tank 11; a plurality of nozzles 12; a plurality of coolant supply passages 13; a first pump 15; a second pump 16; a heat exchanger 17; and a circulation circuit 18. In order to collect the coolant that has been injected onto the workpiece W, the platform 3 includes: a discharge port 3E, which is connected with the coolant tank 11, and which is provided at the center of the platform 3; and a plurality of raked floors 3F, which are inclined downward toward the discharge port 3E. The coolant tank 11 is configured to store the coolant. The plurality of coolant supply passages 13 connect the plurality of nozzles 12 with the coolant tank 11. The plurality of nozzles 12 are attached to the machine tool 1, and are configured to inject the coolant. The first pump 15 is configured to pump the coolant out of the coolant tank 11, and to supply the plurality of nozzles 12 with the coolant through the plurality of coolant supply passages 13. The coolant is injected from the plurality of nozzles 12, and is applied onto the workpiece W during machining, and cutting chips are removed.

The second pump 16 and the heat exchanger 17 are connected with the coolant tank 11 through the circulation circuit 18, which is different from the plurality of coolant supply passages 13. The second pump 16 is configured to pump the coolant out of the coolant tank 11, and to supply the heat exchanger 17 with the coolant through the circulation circuit 18. The heat exchanger 17 removes the heat of the coolant, by using another refrigerant, and discharges the heat to the outside of the machine tool 1.

The chip collector 20 is a device for discharging cutting chips of the workpiece W that have been dropped into the discharge port 3E to the outside of the machine tool 1, by using a chip conveyor. Such a chip conveyor includes a bank (outer wall) so as not to drop the cutting chips to the outside of the chip conveyor, and desirably includes a scraper for convenience of transportation. In FIG. 1, the chip collector 20 is indicated in dotted lines. The mist collector 30 includes: a device body 31, which includes a fan 33 and a filter 34 in the inside; and a duct 32, which is provided on the housing 6, and which is connected with the device body 31. The mist collector 30 rotates the fan, and then sucks the atomized coolant or oil in the housing 6.

FIG. 2 is a block diagram of a hardware configuration of the machine tool 1 according to an embodiment. As illustrated in FIG. 2, the numerical controller 2 is one type of a computer, and includes the hardware processor 2P, the memory 2M, the display 2DS, the input interface 21F, a system bus 2SB, an external I/O interface 2IO, and a communication interface 2CF. The system bus 2SB includes an address bus, a data bus, and a control bus in a similar manner to a general computer. The external I/O interface 2IO is connected with an external device (examples including the first pump 15, the second pump 16, the chip collector 20, and the fan 33). Such an external device may be referred to as at least one piece of equipment. The communication interface 2CF is connected with a network CW.

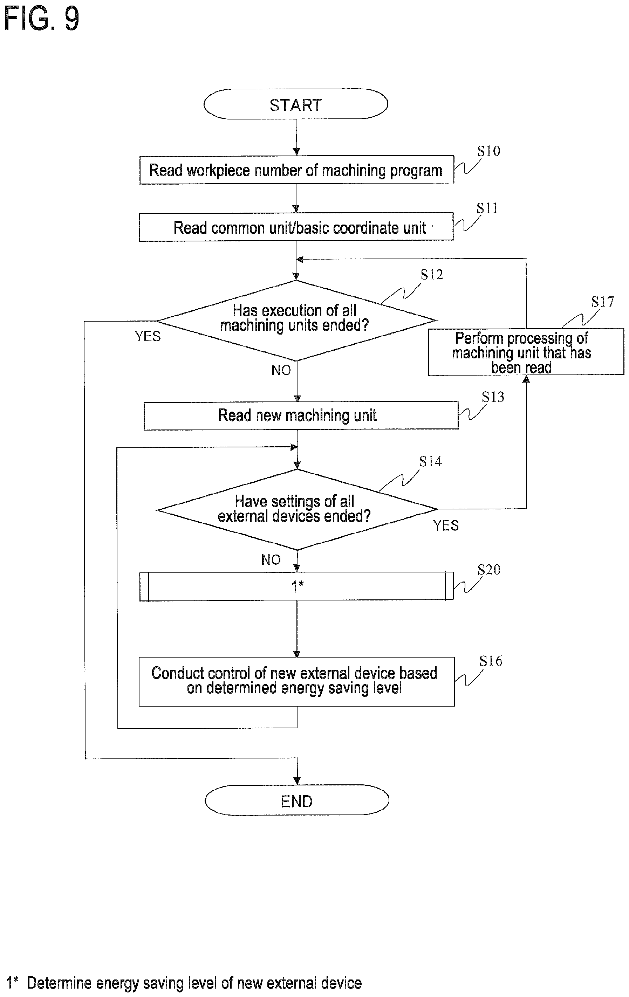

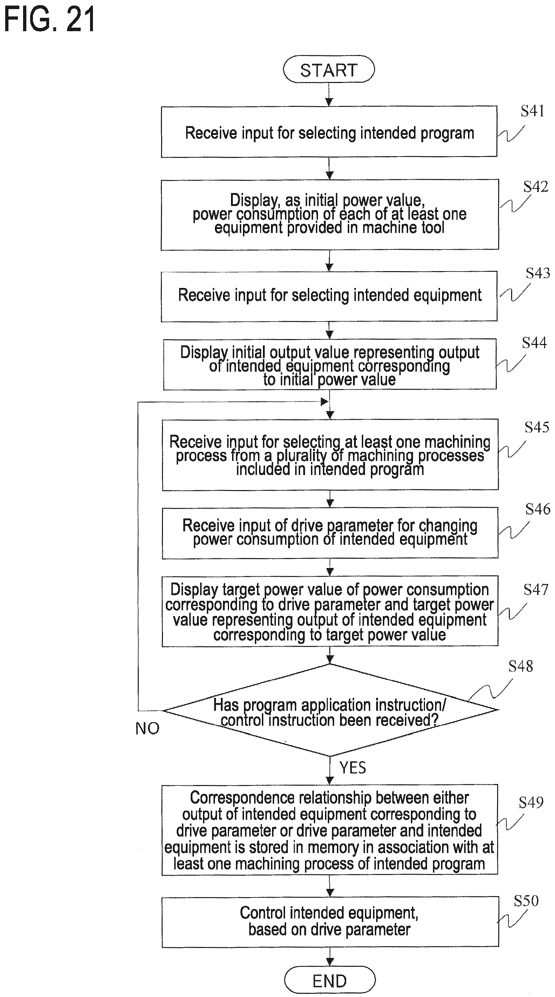

In the memory 2M, a machining program 41 for machining a workpiece W, an equipment control program 42, an equipment setting program 45, and equipment setting data 46 are installed, and the memory 2M is configured to store the machining program 41, the equipment control program 42, the equipment setting program 45, and the equipment setting data 46. The equipment control program 42 includes an interpreter of the machining program 41, and is programmed to read a setting of an external device described in the machining program 41, read a value of a control signal corresponding to such a setting stored in the equipment setting data 46, and output the control signal corresponding to such an external device. It is to be noted that in a case where the setting of an external device is not made in the machining program 41, the equipment control program 42 is programmed to read a default setting value from the equipment setting data 46, read the value of a control signal corresponding to the default setting value, and output the control signal corresponding to such an external device. The hardware processor 2P executes the machining program 41 and the equipment control program 42 to control the spindle unit 5. The hardware processor 2P executes at least the equipment control program 42 to control such an external device. The equipment control program 42 includes an instruction to cause the hardware processor 2P to perform processing of the machining program 41, which is illustrated in FIGs. 9 to 11 to be described later. The equipment setting program 45 is a program for rewriting the equipment setting data 46 or the setting of the machining program 41. The equipment setting program 45 includes an instruction to cause the hardware processor 2P to perform processing of a power consumption control method illustrated in FIG. 21 to be described later.

The first pump 15 includes a first inverter 15I, a first motor 15M, and a first pump 15P. The first inverter 15I drives the first motor 15M in accordance with a drive signal from the numerical controller 2 to be transmitted via the external I/O interface 2IO. The first inverter 15I controls the rotational speed/operation frequency of the first motor 15M in accordance with the drive signal from the numerical controller 2. The first motor 15M rotates the swash plate of the first pump 15P. The first pump 15P is connected with the coolant tank 11. The first pump 15P is configured to discharge the coolant from the coolant tank 11 and supply the plurality of nozzles 12 with the coolant. In the following embodiments, the first motor 15M may be referred to as a first actuator. That is, the first actuator (the first motor 15M) is configured to drive a pump (the first pump 15P) that supplies the nozzles 12 of the machine tool 1 with the coolant. The distribution board 9 includes a power supply PS, which supplies the first inverter 15I with electricity. The power supply PS is preferably an AC power supply.

The second pump 16 includes a second inverter 16I, a second motor 16M, and a second pump 16P. The second inverter 16I drives the second motor 16M in accordance with a drive signal from the numerical controller 2 to be transmitted via the external I/O interface 2IO. The second inverter 16I controls the rotational speed/operation frequency of the second motor 16M in accordance with the drive signal from the numerical controller 2. The second motor 16M rotates the swash plate of the second pump 16P. The second pump 16P is connected with the coolant tank 11. The second pump 16P is configured to discharge the coolant from the coolant tank 11 and supply the heat exchanger 17 with the coolant. In the following embodiments, the second motor 16M may be referred to as a second actuator. That is, the second actuator (the second motor 16M) is configured to drive a pump (the second pump 16P) that supplies the heat exchanger 17 with the coolant reserved in the coolant tank 11. The power supply PS of the distribution board 9 also supplies the second inverter 16I with electricity.

The chip collector 20 includes a third inverter 20I and a third motor 20M. The third inverter 20I drives the third motor 20M in accordance with a drive signal from the numerical controller 2 to be transmitted via the external I/O interface 2IO. The third inverter 20I controls the rotational speed/operation frequency of the third motor 20M in accordance with the drive signal from the numerical controller 2. The third motor 20M is configured to drive a belt conveyor via a reduction gear, not illustrated, or the like. In the following embodiments, the third motor 20M may be referred to as a third actuator. That is, the third actuator (the third motor 20M) is configured to drive the chip conveyor of the machine tool 1. The power supply PS of the distribution board 9 also supplies the third inverter 20I with electricity.

The fan 33 of the mist collector 30 includes a fourth inverter 33I and a fourth motor 33M. The fourth inverter 33I drives the fourth motor 33M in accordance with a drive signal from the numerical controller 2 to be transmitted via the external I/O interface 2IO. The fourth inverter 33I controls the rotational speed/operation frequency of the fourth motor 33M in accordance with the drive signal from the numerical controller 2. The fourth motor 33M is configured to drive the belt conveyor via a reduction gear, not illustrated, or the like. In the following embodiments, the fourth motor 33M may be referred to as a fourth actuator. That is, the fourth actuator (the fourth motor 33M) is configured to drive a fan (the fan 33) for discharging the mist accumulated in a machine body of the machine tool 1. The power supply PS of the distribution board 9 also supplies the fourth inverter 33I with electricity.

The computer 99 is used, for example, for generating the machining program 41. The computer 99 includes a hardware processor 99P, a memory 99M, a display 99DS, an input interface 99IF, a system bus 99SB, and a communication interface 99CF, which respectively have functions substantially equivalent to the hardware processor 2P, the memory 2M, the display 2DS, the input interface 21F, the system bus 2SB, and the communication interface 2CF. In the memory 99M of the computer 99, the machining program 41, the equipment setting program 45, and the equipment setting data 46 are installed, and the memory 99M is configured to store the machining program 41, the equipment control program 42, and the equipment setting data 46. When the equipment control program 42 is executed on the computer 99, equipment settings are made for the machining program 41, which is stored in the memory 99M, and its results are stored in the equipment setting data 46 in the memory 99M. The machining program 41, which has been generated on the computer 99, and the equipment setting data 46, which is set on the computer 99, are sent to the numerical controller 2 via the communication interface 99CF, the network NW, and the communication interface 2CF.

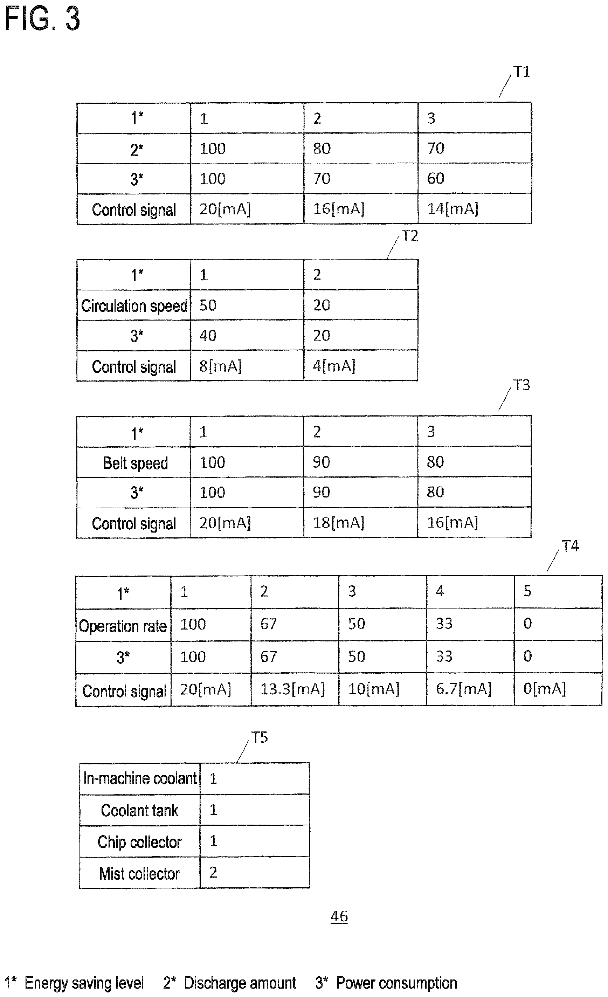

Next, the equipment setting data 46 to be read by the equipment control program 42 and to be read and written by the equipment setting program 45 will be described. The equipment setting data 46 includes a plurality of energy levels (energy saving levels) of the above external devices (examples including the first pump 15, the second pump 16, the chip collector 20, and the fan 33), an output and power consumption of the external device at each level, and a control signal value for the external device. This energy saving level may be referred to as a drive parameter. The equipment setting data 46 further includes the setting of a default energy saving level of each external device. FIG. 3 illustrates types and values of data stored as the equipment setting data 46 in a table format. It is to be noted that illustration in the table format is given for convenience of description, but any type of data format is applicable, as long as each data value is identifiable and stored in a computer-readable manner. Examples of the data format include a csv file, an xml file, and a database. In addition, in a case where each data value is stored in a predetermined address, the equipment setting data 46 may not necessarily include data indicating the type of data.

In FIG. 3, a table T1 indicates a plurality of energy saving levels of the first pump 15, discharge amounts per unit time of the coolant respectively corresponding to those levels and obtained from either the operation frequency or the rotational speed of the first motor 15M (the first actuator), power consumption to be consumed by the first inverter 15I when the first motor 15M is driven at either the operation frequency or the rotational speed, and values of the control signals (control current values) output from the external I/O interface 2IO in order to drive the first motor 15M at either the operation frequency or the rotational speed. The table T2 indicates a plurality of energy saving levels of the second pump 16, supply amounts of the coolant to the heat exchanger 17 per unit time respectively corresponding to those levels and obtained from either the operation frequency or the rotational speed of the second motor 16M (the second actuator), power consumption to be consumed by the second inverter 16I when the second motor 16M is driven at either the operation frequency or the rotational speed, and values of the control signals (control current values) output from the external I/O interface 2IO in order to drive the second motor 16M at either the operation frequency or the rotational speed. In the following embodiments, the supply amount of the coolant to the heat exchanger 17 per unit time will be referred to as a circulation speed.

The table T3 indicates a plurality of energy saving levels of the chip collector 20, belt speeds of the chip conveyor respectively corresponding to those levels and obtained from either the operation frequency or the rotational speed of the third motor 20M (the third actuator), power consumption to be consumed by the first inverter 15I when the third motor 20M is driven at either the operation frequency or the rotational speed, and values of the control signals (control current values) output from the external I/O interface 2IO in order to drive the first motor 15M at either the operation frequency or the rotational speed. The table T4 indicates a plurality of energy saving levels of the fan 33, operation rates respectively corresponding to those levels and obtained from either the operation frequency or the rotational speed of the fourth motor 33M (the fourth actuator) or obtained from a ratio of a working period to unit time, power consumption to be consumed by the fourth inverter 33I when the fourth motor 33M is driven at such an operation rate, and values of the control signals (control current values) output from the external I/O interface 2IO in order to drive the fourth motor 33M at the operation rate. In the following embodiments, the discharge amount, the circulation speed, the belt speed, and the operation rate described above may be collectively referred to as an output of an external device.

A level 1 is intended to mean an energy saving level when an output is made by an external device, and such an output is empirically understood to be capable of handling any of various types of machining to be done by the machine tool 1. The level 1, in most cases, is set to a case where an actuator is operated at rated power consumption. In addition, as the number of the level increases, the output of the external device decreases. The level number of a level 2 or larger is determined, based on whether an operator easily recognizes a difference in the output of each external device for every level. For example, an in-machine coolant has different discharge amounts of the cutting chips, as determined by a load in machining such as rough processing or finishing processing, and also has different discharge amounts of the cutting chips, as determined by a difference in the machining tool such as a drill or a mill. Thus, three levels are provided to enable adjustments respectively corresponding to the discharge amounts. However, the operation of the mist collector 30 largely influences the visibility of the operator when viewing the inside of the machine body, and thus five levels are provided.

The output and the power consumption of the external device are described in percentage terms with a maximum value 100. Here, a value described as the power consumption of each level in the tables is intended to mean a value indicating a ratio of the power consumption of each level to the rated power consumption in percentage terms, in a case where the rated power consumption of each actuator is set at 100%. The value described as the output of the external device at the level 1 is intended to mean the output that is empirically understood to be capable of handling any of various types of machining to be done by the machine tool 1, and is intended to mean a value indicating a ratio of the output of the external device in percentage terms when the external device is driven with such power consumption, in a case where the output of the external device is set at 100% when each actuator is driven with the rated power consumption. According to the table T2, even though the power consumption of the second motor 16M (the second actuator) is 40% the rated power consumption, it is empirically understood to be capable of handling any of various types of machining to be done by the machine tool 1. Thus, 40% of the rated power consumption is set at the level 1.

The value of the control signal described in each level is an example of a control signal to be assumed in a case where a control signal of 20 mA is output to the first inverter 15I to the fourth inverter 33I, the first inverter 15I to the fourth inverter 33I operate at the rated power consumption and in a case where the power consumption of the first inverter 15I to the fourth inverter 33I changes in proportion to the value of the control signal. Actually, values respectively corresponding to the properties of the first inverter 15I to the fourth inverter 33I are stored.

A table T5 indicates the respective default energy saving levels of the first pump 15, the second pump 16, the chip collector 20, and the fan 33. In this example, an "in-machine coolant" is intended to mean the first pump 15, a "coolant tank" is intended to mean the second pump 16, and a "chip collector" is intended to mean the chip collector 20, and a "mist collector" is intended to mean the fan 33 in the mist collector 30. The default energy saving level is intended to mean an energy saving level to be set in any of the first pump 15, the second pump 16, the chip collector 20, and the fan 33, in a case where the energy saving level of any of the above devices is not set in the machining program 41. In a case where the energy saving level of any of the first pump 15, the second pump 16, the chip collector 20, and the fan 33 is set in the machining program 41, the energy saving level set in the machining program 41 is prioritized. The devices mentioned above are merely examples. The device for which the energy saving level can be set may be a pump for cleaning a filter with the coolant in order to reduce or eliminate clogging of the filter in a conveyor provided with the filter having high filtering accuracy in the chip collector 20, or may be a pump that sucks the coolant accumulated in the coolant tank and discharges the coolant to the coolant tank again to agitate and make a flow in order to send the cutting chips deposited inside the coolant tank to the filter for filtering the cutting chips.

Next, the contents of the machining program 41 will be described. In the present embodiment, the format of the machining program 41 that can be processed by the equipment control program 42 and the equipment setting program 45 includes both the format of an interactive program and the format of a program in an Electronic Industries Alliance/International Organization for Standardization (EIA/ISO) format. In the machining program 41 of an interactive type, at least the following contents are defined.
(1) Common unit: Material and the shape of pre-machined workpiece W.
(2) Basic coordinate unit: Method for setting the workpiece coordinate system and the machine coordinate system.
(3) Machining unit: Machining methods and machined shapes of parts of final machined shape.

The common unit, the basic coordinate unit, and the machining unit each include a unit number.

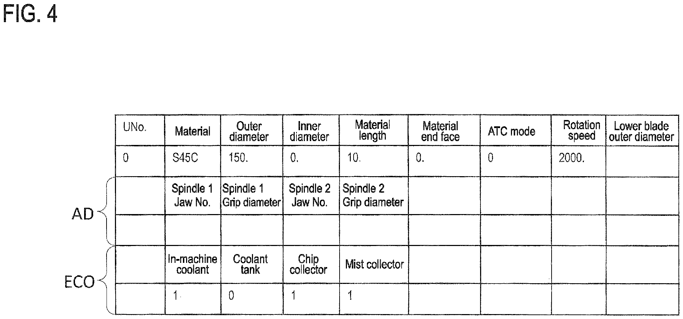

As illustrated in FIG. 4, separately from the data representing the material and the shape of the workpiece W, the common unit further includes arrangement data AD representing settings of a chuck and a gripper for gripping the workpiece W, and energy saving setting data ECO to be used in setting the energy saving level of any of the first pump 15, the second pump 16, the chip collector 20, and the fan 33, in the entire processing of the machining program 41. For the energy saving setting data ECO, similar contents to those in the table T5 of the equipment setting data 46 are set. It is to be noted that the external device at the level 0 indicates that the energy saving level is not set in the common unit.

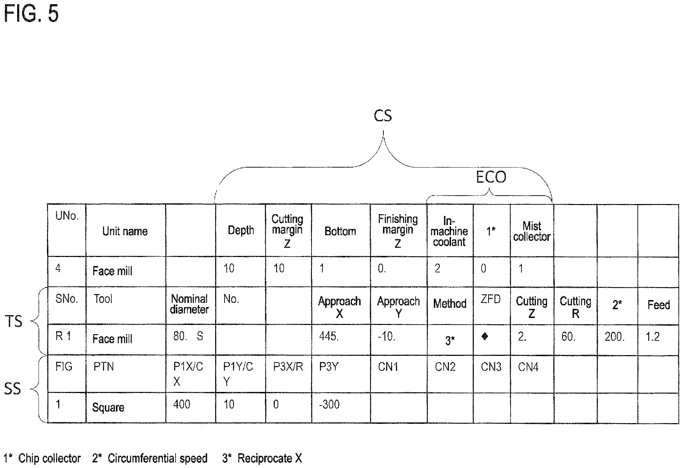

As illustrated in FIG. 5, the machining unit includes: a unit number UNo.; common setting data CS to be commonly used in the machining unit; information (a unit name) for identifying a machining content; a tool sequence TS for setting a tool Ta and a cutting condition of the tool Ta; and a shape sequence SS for defining a machined shape to be machined in the machining unit. The tool sequence TS is intended to mean a series of machining stages necessary for forming a machined shape of a part (for example, one bar material and one screw hole) specified in the machining unit. The shape sequence SS is intended to mean an aggregation of segments defined by parameters for determining a machined shape, such as: a start point and an end point of the cutting edge of a tool in the workpiece coordinate system; and a connection relationship indicating how the start point and the end point are connected to each other (such as by way of a line or an arc).

In the example of FIG. 5, an example in which the machining unit includes one tool sequence TS and one shape sequence SS is illustrated. However, the machining unit may include two tool sequences including a tool sequence for rough processing and a tool sequence for finishing processing. In order to handle a complicated machined shape, the machining unit may include a plurality of shape sequences. In a case where the machining unit includes a plurality of tool sequences and a plurality of shape sequences, in performing the machining unit, first, the tool is moved to generate shapes indicated by all the shape sequences for every one of the tool sequences in accordance with an arrangement order of the tool sequences. Each tool sequence is distinguished by a sequence number SNo. Each shape sequence is distinguished by the number described in a FIG item. In the present embodiment, the entire processing applied to the machining unit will be referred to as a machining process.

The common setting data CS of the machining unit further includes the energy saving setting data ECO to be used for setting the energy saving level of any of the first pump 15, the second pump 16, the chip collector 20, and the fan 33 in the entire processing of the machining unit. In the energy saving setting data ECO, similar contents to those in the table T5 of the equipment setting data 46 are set, except for the setting of the second pump 16 ("coolant tank"). The setting of the second pump 16 in the unit of the machining unit is not provided, and the second pump 16 is to be controlled in a single method in the entire machining program 41. It is to be noted that the external device ("chip collector") that is set at the level 0 in FIG. 5 indicates that the energy saving level is not set in the machining unit.

Unless the energy saving level set in the machining unit is the level 0, the external device is controlled, while the machining unit is being performed, in accordance with the energy saving level set in the machining unit with a higher priority than the energy saving level set in the common unit and the default energy saving level set in the equipment setting data 46. However, in a case where the energy saving level set in the machining unit is the level 0, the energy saving level set in the common unit is referred to. In a case where the energy saving level is the level 0, the default energy saving level set in the equipment setting data 46 is referred to in accordance with the level. Then, the external device having a higher energy saving level than that in the machining unit has been referred to is controlled in accordance with the energy saving level that has been referred to, other than the reference level 0. It is to be noted that in the equipment setting data 46, the energy saving level is restricted not to be set at the level 0.

In the example of FIG. 5, while the common unit having the unit number UNo. 4 is being performed, the first pump 15 is controlled so that the energy saving level becomes the level 2, and the fan 33 is controlled so that the energy saving level becomes the level 1. The energy saving levels of the second pump 16 and the chip collector 20 are set at the level 0. Therefore, the energy saving setting data ECO of the common unit is referred to. In the common unit in the example of FIG. 4, the energy saving level of the chip collector 20 is set at the level 1. Thus, while the common unit having the unit number UNo. 4 is being performed, the chip collector 20 is controlled so that the energy saving level becomes the level 1. In the second pump 16, both the energy saving levels in the common unit and the machining unit are set at the level 0, and the energy saving level in the equipment setting data 46 in FIG. 3 is referred to. The level 1 is set in the equipment setting data 46, and the second pump 16 is controlled so that the energy saving level becomes the level 1.

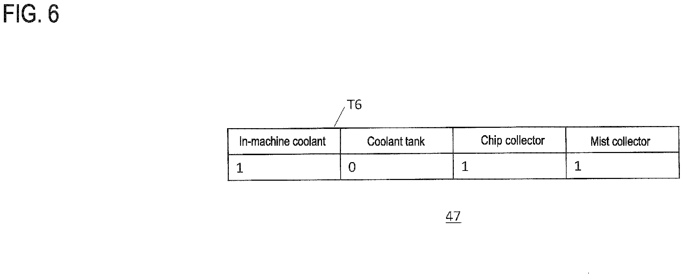

The machining program 41 is not limited to the examples of FIGs. 4 and 5, and may be a program based on the EIA/ISO format (a program in an EIA/ISO format). In a case of the program in the EIA/ISO format, the machining program 41 is stored in a format different from that of the machining program 41 of an interactive type. Referring to FIG. 2, in the memory 2M, individual data 47 is further installed to handle the machining program 41 in the EIA/ISO format, and the memory 2M is configured to further store the individual data 47. Similarly, in the memory 99M, the individual data 47 is set to be unique for every machining program 41, and is associated with a workpiece number WNo. to be used when the machining program 41 is called and executed on the machine tool 1. In this association, a known method may be adopted by including a workpiece number WNo. in a file name or including the workpiece number WNo. in a file header. For this reason, the individual data 47 is provided to be equal in number with the machining programs 41 in the EIA/ISO format. FIG. 6 is a setting example of the energy saving levels of the external devices to be set in accordance with the individual data 47 for every program in the EIA/ISO format. A table T6 of FIG. 6 is an example indicating the respective energy saving levels of the first pump 15, the second pump 16, the chip collector 20, and the fan 33.

FIG. 6 illustrates the types and the values of data stored as the individual data 47 in a table format. It is to be noted that the table format is illustrated for convenience of description, and as long as each data value is identifiable and stored in a computer-readable manner, any data format is applicable. Examples of the data format include a csv file, an xml file, and a database. In addition, as long as each data value is stored in a predetermined address, the equipment setting data 46 may not necessarily include data indicating the type of data. In the table T6, similar contents to those in the table T5 of the equipment setting data 46 are set. It is to be noted that FIG. 6 is an example, and the settings corresponding to FIG. 6 may be made in a G code at the head of the program in the EIA/ISO format (for example, subsequent to a program number or definitions of variables).

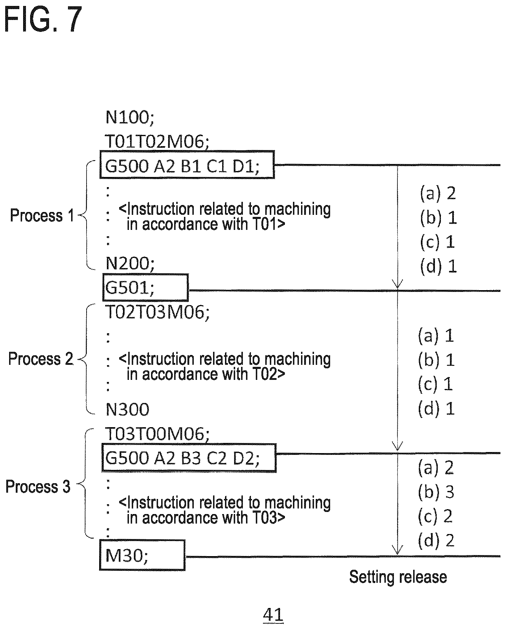

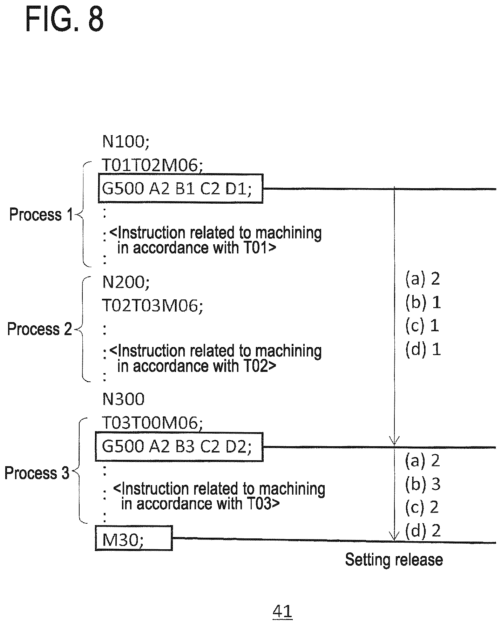

FIG. 7 is an example of the program in the EIA/ISO format for a case where the energy saving level is set for every machining process. FIG. 8 is another example of the program in the EIA/ISO format for the case where the energy saving level is set for every machining process. The machining process in the program in the EIA/ISO format is a period between calling of one tool by the T code and calling of the next T code or calling of an M30 code indicating the program end. In the program in the EIA/ISO format of FIGs. 7 and 8, one machining process starts with a command for replacing the tool with a tool of T01 in accordance with "T01T02M06" subsequent to a sequence number "N100", and ends at a command for replacing the tool with a tool of T02 in accordance with "T02T03M06" subsequent to a sequence number "N200". This process will be referred to as a first process for convenience of description. Next, one machining process starts with the command for replacing the tool with the tool of T02 in accordance with "T02T03M06" subsequent to the sequence number "N200" and ends at a command for replacing the tool with the tool of T03 in accordance with "T03T00M06" subsequent to a sequence number "N300". This process will be referred to as a second process for convenience of description. Furthermore, one machining process starts with the command for replacing the tool with the tool of T03 in accordance with "T03T00M06" subsequent to the sequence number "N300", and ends at a command of "M30" indicating the program end. This process will be referred to as a third process for convenience of description.

FIG. 7 illustrates an example in which a different energy saving level is set for every machining process, and FIG. 8 illustrates an example in which the same energy saving level is set for a plurality of machining processes. In FIGs. 7 and 8, a G500 code immediately below an M06 code represents a command for operating the respective external devices with the energy saving levels for the respective external devices specified by its subsequent A* B* C* D* (* represents a numeral), from the machining process specified by the T code immediately above the G500 code to the machining process until a G501 code is called or the machining process until another G500 code is called. A indicates the energy saving level for the first pump 15 ("in-machine coolant"). B indicates the energy saving level for the second pump 16 ("coolant tank"). C indicates the energy saving level for the chip collector 20 ("chip collector"). D indicates the energy saving level for the fan 33 ("mist collector") of the mist collector 30.

The numerals indicated subsequent to the respective codes of A, B, C, and D correspond to the numerals in the first rows in the tables T1 to T4 in FIG. 3. In a case where no corresponding numeral is present, the energy saving level is regarded as 0, and the setting in the machining program or the default setting will be referred to. In FIGs. 7 and 8, (a)* (b)* (c)* (d)* (* represents a numeral) each denotes the energy saving level to be set in the machining process. The numeral subsequent to (a) is the energy saving level set in the first pump 15 ("in-machine coolant"). The numeral subsequent to (b) is the energy saving level set in the second pump 16 ("coolant tank"). The numeral subsequent to (c) is the energy saving level set in the chip collector 20 ("chip collector"). The numeral subsequent to (d) is the energy saving level corresponding to the fan 33 ("mist collector") of the mist collector 30.

In the first process of the program of FIG. 7, the settings of (a)2 (b)1 (c)1 (d)1 in the G500 code are performed. In the second process, after the G501 code, the G500 code is not set, so the settings of the individual data 47 are referred to. With regard to the energy saving level (in the example of FIG. 6, the second pump 16 (coolant tank)) that is not set in the individual data 47 either, the default setting (the table T5 of the equipment setting data 46) is referred to. As a result, in the second process, the settings of (a)1 (b)1 (c)1 (d)1 are performed. In the third process, the settings of (a)2 (b)3 (c)2 (d)2 in another G500 code are performed.

In the program of FIG. 8, the G501 code that is present in the program of FIG. 7 is omitted. In this case, the settings of the first process are also applied to the second process without change. It is to be noted that although not illustrated in FIG. 7 or FIG. 8, in a case where another T code is set before the instruction of "T01T02M06" and another machining process is further set, the settings of the individual data 47 and the default settings are to be referred to, in a similar manner to the second process of FIG. 7, in both cases of FIGs. 7 and 8.

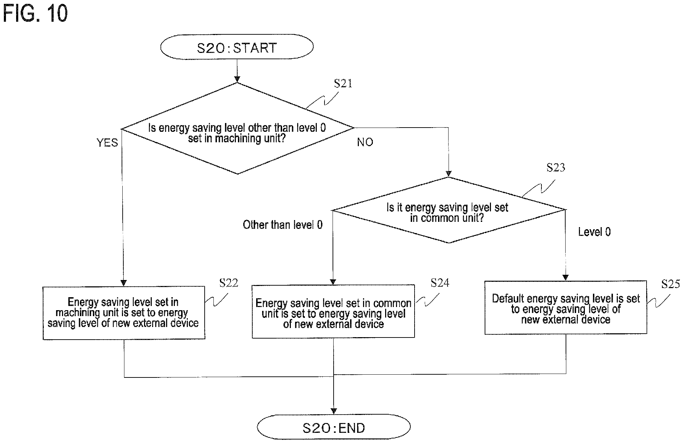

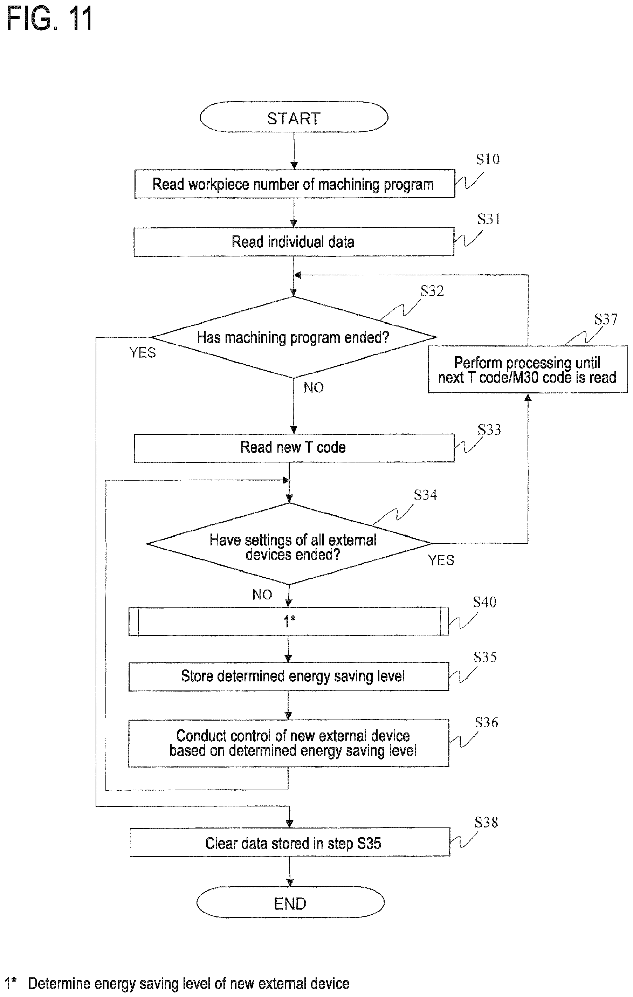

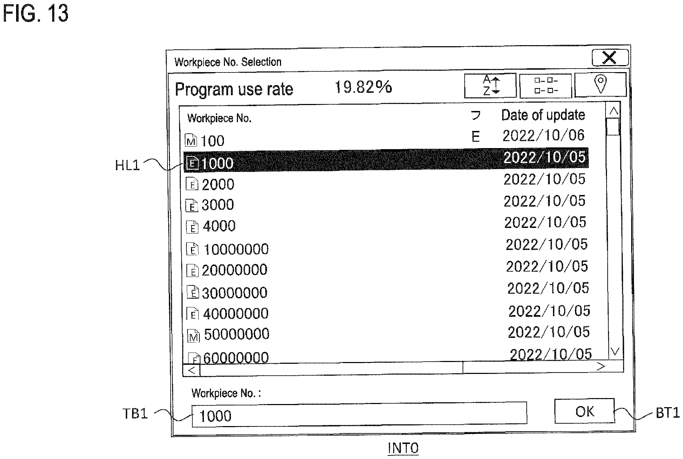

Next, the operation of the equipment control program 42 of the machine tool 1 will be described. FIG. 9 is a flowchart of a processing flow in a method for executing the machining program 41 of an interactive type of the machine tool 1. FIG. 10 is a flowchart of a processing flow in step S20 in FIG. 9. FIG. 11 is a flowchart of a processing flow in a method for executing the machining program 41 in the EIA/ISO format of the machine tool 1. In FIG. 9, in step S10, the processor 2P, which executes the equipment control program 42, reads a workpiece number WNo. of the machining program that has been selected on an interface INTO of the machining program and that is to be executed, as illustrated in FIG. 13, for example. In FIG. 13, a screen is displayed as an example in which a row of the machining program intended to be executed from now has been selected by, for example, clicking or the like, such selection is detected via the input interface 21F, the selected row is displayed in a highlight HL1, and the workpiece number WNo. related to the selected row is displayed in a text box TB1. Upon detection of pressing an OK button BT1 on this screen via the input interface 21F, the workpiece number WNo. of the machining program displayed in the text box TB1 is read. In the following embodiments, the machining program 41, which corresponds to the workpiece number WNo. that has been read, may be referred to as an intended program. It is to be noted that FIG. 13 is an example, and the workpiece number WNo. may be selected and read by using any other interface (such as a drop-down list or a radio button) used in a general-purpose computer.

In step S11, the processor 2P, which executes the equipment control program 42, performs processing of reading the common unit and the basic coordinate unit from the machining program 41. In step S12, the processor 2P, which executes the equipment control program 42, determines whether the execution of all the machining units has ended. In a case where the execution of all the machining units has ended (Yes in step S12), the execution of the machining program 41 ends. In the other case (No in step S12), the processor 2P, which executes the equipment control program 42, performs processing of reading a new machining unit in step S13. In step S14, the processor 2P, which executes the equipment control program 42, performs processing of determining whether the settings of all the external devices have ended in such a new machining unit.

In a case where the settings of all the external devices have not ended (No in step S14), the processor 2P, which executes the equipment control program 42, performs processing of determining the energy saving level of a new external device in step S20. Specifically, in step S21 in FIG. 10, the processor 2P, which executes the equipment control program 42, performs processing of determining whether the energy saving level of the external device other than the level 0 is set. In a case where the energy saving level other than the level 0 is set in the machining unit (YES in step S21), the processor 2P, which executes the equipment control program 42, performs processing of setting the energy saving level set in the machining unit as the energy saving level of the new external device in step S22. In a case where the energy saving level set in the machining unit is the level 0 or the energy saving level is not set in the machining unit like the second pump 16 (NO in step S22), the processor 2P performs processing of checking the energy saving level of the external device set in the common unit in step S23. In a case where the energy saving level set in the common unit is other than the level 0, the processor 2P, which executes the equipment control program 42, performs processing of setting the energy saving level set in the common unit to the energy saving level of the new external device in step S24. In a case where the energy saving level set in the common unit is the level 0, the processor 2P, which executes the equipment control program 42, performs processing of setting the default energy saving level (the energy saving level set as in the table T5 of the equipment setting data 46) to the energy saving level of the new external device in step S25.

Returning to FIG. 9, after step S20 ends, the processor 2P, which executes the equipment control program 42, controls a new external device, based on the determined energy saving level in step S16. Specifically, the processor 2P, which executes the equipment control program 42, reads a control current value corresponding to the energy saving level from any of the tables T1 to T4 of the equipment setting data 46, and outputs the control signal in accordance with the control current value to an inverter (any of the first inverter 15I to the fourth inverter 33I) corresponding to the new external device. After step S16 ends, the processing returns to step S14. In step S14, in a case where the settings of all the external devices have ended (Yes in step S14), the processor 2P, which executes the equipment control program 42, performs processing of the machining unit that has been read, in step S17. After step S17 ends, the processing returns to step S12.

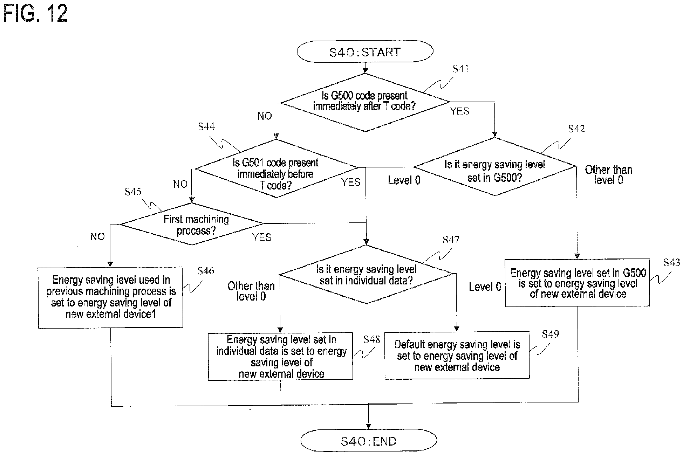

Next, a processing flow of executing the machining program 41 in the EIA/ISO format will be described. FIG. 11 is a flowchart of a processing flow in a method for executing the machining program 41 in the EIA/ISO format of the machine tool 1. FIG. 12 is a flowchart of a processing flow in step S40 in FIG. 11. In FIG. 11, the same processing with that of FIG. 9 is denoted by the same reference numeral, and detailed description will be omitted. After step S10 ends in FIG. 11, the individual data 47, which corresponds to the workpiece number WNo. of the machining program to be executed is read in step S31. In step S32, the processor 2P, which executes the equipment control program 42, performs processing of determining whether the machining program 41 has ended, by determining whether the M30 code has been read. In a case where the machining program 41 has not ended (No in step S32), the processor 2P, which executes the equipment control program 42, performs processing of reading a new T code from the table T6 of the equipment setting data 46 in step S33. The above-described processing indicates the processing of tool replacement also including the M06 code. However, in some types of the machine tool, the tool is replaced by simply calling the T code, without calling the M06 code. Thus, the start of the machining process is determined by reading the T code.

Next, in step S34, the processor 2P, which executes the equipment control program 42, performs processing of determining whether the settings of all the external devices have ended in the new machining process. In a case where the settings of all the external devices have not ended (No in step S34), the processor 2P, which executes the equipment control program 42, performs processing of determining the energy saving level of the new external device in step S40. Specifically, in step S41 of FIG. 12, the processor 2P, which executes the equipment control program 42, performs processing of determining whether the G500 code is present immediately after the T code. In a case where the G500 code is present immediately after the T code (Yes in step S41), the processor 2P, which executes the equipment control program 42, performs processing of determining whether the energy saving level of the external device other than the level 0 is set in the G500 code in step S42. In a case where the energy saving level other than the level 0 is set in the G500 code (Yes in step S42), the processor 2P, which executes the equipment control program 42, performs processing of setting the energy saving level set in the G500 code to the energy saving level of a new external device in step S43.

In a case where the G500 code is not present immediately after the T code (No in step S41), the processor 2P, which executes the equipment control program 42, performs processing of determining whether the G501 code is present immediately before the T code in step S44. In a case where the G501 code is not present immediately before the T code (No in step S44), the processor 2P, which executes the equipment control program 42, performs processing of determining whether the current machining process is a first machining process of the machining program 41 in step S45. It is possible to determine this processing in accordance with whether the setting of the energy saving level of the machining process immediately before being stored in step S35, as will be described later, is stored in the memory. In a case where the current machining process is not the first machining process (No in step S45), the processor 2P, which executes the equipment control program 42, sets in step S46, the energy saving level of the new machining device to the energy saving level that has been used in the machining process immediately before the energy saving level of the new machining device is stored in step S35.

In a case where the energy saving level of the external device of the level 0 is set in the G500 code immediately after the T code in step S42, the G500 code is not present immediately after the T code, and the G501 code is present immediately before the T code (Yes in step S44), or in a case where the current machining process is the first machining process (Yes in step S45), the processor 2P, which executes the equipment control program 42, performs processing of checking the energy saving level of the external device set in the individual data 47 in step S47. In a case where the energy saving level set in the individual data 47 is other than the level 0, the processor 2P, which executes the equipment control program 42, performs processing of setting the energy saving level set in the individual data 47 to the energy saving level of the new external device in step S48. In a case where the energy saving level set in the individual data 47 is level 0, the processor 2P, which executes the equipment control program 42, performs processing of setting the default energy saving level (the energy saving level set as in the table T5 of the equipment setting data 46) to the energy saving level of the new external device in step S49.

In a case where the energy saving level of the new external device is determined, the processor 2P, which executes the equipment control program 42, stores the determined energy saving level in the memory 2M in association with the new external device in step S35. This data is different from the individual data 47. In step S36, the processor 2P, which executes the equipment control program 42, reads the control current value corresponding to the determined energy saving level from any of the tables T1 to T4 of the equipment setting data 46, and performs processing of outputting the control signal in accordance with the control current value to an inverter (any of the first inverter 15I to the fourth inverter 33I) corresponding to the new external device. In a case where the settings of all the external devices have ended in step S32 (Yes in step S32), the processor 2P, which executes the equipment control program 42, performs in step S37, processing of the machining program 41 until either the next T code or the M30 code is read. In a case where the M30 code is read and the machining program 41 ends (Yes in step S32), the processor 2P, which executes the equipment control program 42, performs in step S38, processing of clearing the data stored in step S35. It is to be noted that in a case where the data is stored in a volatile memory and is automatically erased from the memory when the machining program 41 ends, the processing of step S38 may be omitted.

### <Change of Equipment Setting Data 46 While Executing Machining Program 41>

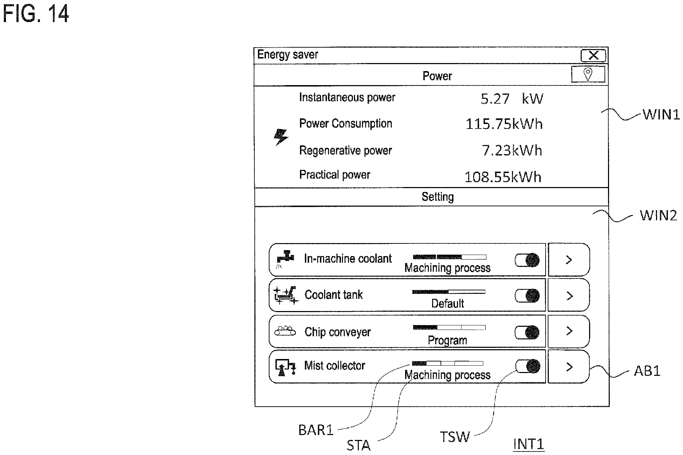

Next, a method for changing the equipment setting data 46 will be described. The operator is able to change the equipment setting data 46 while executing the machining program 41. This is an operation that cannot be performed on the computer 99. The processor 2P, which executes the equipment setting program 45, is configured to perform processing of displaying the interface INT1 as illustrated in FIG. 14 in a table format on the control panel 2CP, while performing step S17 in FIG. 9 in the case of the machining program 41 of an interactive type, or while performing step S37 in FIG. 11 in the case of the machining program 41 in the EIA/ISO format. In the example of FIG. 14, description will be made with an example with regard to a case where 1000 is selected as a workpiece number on the interface INTO as illustrated in FIG. 13 and the machining program 41 illustrated in FIGs. 4 and 5 is currently executing the machining unit having the unit number 4 illustrated in FIG. 5 (the machining program illustrated in FIG. 7 or FIG. 8 is the program for the workpiece number 1000 and the first process is currently being performed).

On the interface INT1, the entire status of the current power consumption is displayed in a window WIN1 on an upper side. In a window WIN2 on a lower side, the current energy saving levels of the first pump 15, the second pump 16, the chip collector 20, and the fan 33 are indicated. The same descriptions of the table T5 in FIG. 3 also apply to the "in-machine coolant", the "coolant tank", the "chip collector", and the "mist collector", which respectively denote the first pump 15, the second pump 16, the chip collector 20, and the fan 33 inside the mist collector 30. A bar graph BAR1, which is displayed on the right side of the external device, is intended to mean the energy saving level with which the external device is currently working. To correspond to the power consumption, with regard to the energy saving level, the bar graph BAR1 can be said to display the power consumption. In addition, the energy saving level with which the external device is currently working in this situation may be referred to as an initial power value. It is to be noted that the bar graph BAR1 may display a percentage of the power consumption corresponding to the energy saving level (see the tables T1 to T4 in FIG. 3). The bar graph BAR1 has divisions of a scale corresponding to the maximum number of the energy saving levels of the external device, and the energy saving level is identifiable by a bar length.

A text STA, which is described on a lower side of the bar graph BAR1, indicates which one of the table T5 of the equipment setting data 46, the common unit (or the table T6 of the individual data 47 in the case of the program in the EIA/ISO format), and the machining unit (or the G500 code in the case of the program in the EIA/ISO format) the energy saving level displayed on the bar graph BAR1 is set at. "Default" indicates the default energy saving level set in the table T5 of the equipment setting data 46. "Program" indicates the energy saving level set in the common unit (or the table T5 of the equipment setting data 46 in the case of the program in the EIA/ISO format). "Machining process" indicates the energy saving level set in the machining unit (or the G500 code in the case of the program in the EIA/ISO format). It is to be noted that "Default", "Program", and "Machining process" are each an example, and may be represented by any other character string or symbol.

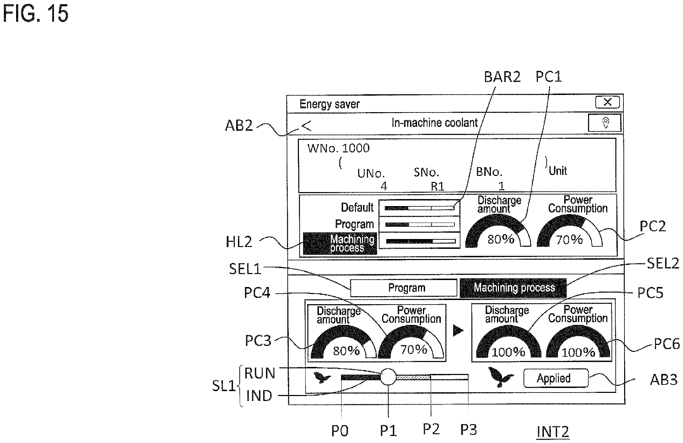

A toggle switch TSW is a switch for setting the change permission for the energy saving level of the external device corresponding to the name (the "in-machine coolant", the "coolant tank", the "chip collector", or the "mist collector") displayed on the left side of the toggle switch TSW. In a case where the toggle switch TSW is set on the right side, when an arrow button AB1 on a further right side is pressed, the processor 2P, which executes the equipment setting program 45, displays setting change interfaces INT2 to INT5 (see FIGs. 15 to 18) for changing the setting of the external device on the control panel 2CP in order to permit a change in the setting of the corresponding external device. In the following embodiments, the external device corresponding to the arrow button AB1 that has been pressed may be referred to as intended equipment. However, in a case where the toggle switch TSW is set to the left side, even though the arrow button AB1 on the right side is pressed, the setting change interfaces INT2 to INT5 are not displayed. In addition, the processor 2P, which executes the equipment control program 42, temporarily sets the energy saving level to the default energy saving level, and controls the external device, the toggle switch TSW of which is set to the left side.

FIGs. 15 to 18 respectively display the setting change interfaces INT2 to INT5 of the first pump 15, the second pump 16, the chip collector 20, and the fan 33 of the mist collector 30 to be displayed when the arrow button AB1 is pressed. In FIGs. 15 to 18, the same reference numerals are applied to the interface items having the same functions, and overlapping descriptions will be omitted. An arrow button AB2 on an upper left corner of each of the interfaces INT2 to INT5 is a button to be pressed to return to the interface INT1. Below the arrow button AB2, the workpiece number WNo. of the machining program 41, which is currently executed, the unit number UNo. for specifying the machining unit, and a sequence number Sno. of the tool sequence, and a sequence number BNo. of the shape sequence are displayed. It is to be noted that in the case of the program in the EIA/ISO format, the T code of the tool that is currently used or the row number of the program that is currently executed may be displayed instead of UNo. SNo. and BNo.

Below the unit number UNo. for specifying the machining unit, the sequence number SNo. of the tool sequence, and the sequence number BNo. of the shape sequence, "Default", "Program", and "Machining process" respectively representing the same meanings with those in the description of the interface INT1 are displayed. On the right side of them, bar graphs BAR2, which indicate the energy saving levels respectively corresponding to them. On the interface INT3 for making energy saving setting of the second pump 16, an item related to "Machining process" is not provided. The bar graph BAR2 has divisions of a scale corresponding to the maximum number of the energy saving levels of the external device, and the energy saving level is identifiable by a bar length. It is to be noted that a case where no bar is displayed indicates that the energy saving level is not set (the energy saving level is 0). Among "Default", "Program", and "Machining process", the one displayed in a highlight HL2 indicates the current energy saving level of the external device. A circular graph PC 1 on a right side of the bar graph BAR2 represents the current output of the external device in percentage terms, and a circular graph PC2 on a further right side represents the current power consumption of the external device in percentage terms. These percentages are the same with the values indicated in the tables T1 to T4 in FIG. 3.

Below the bar graph BAR2 and the circular graphs PC1 and PC2, a selection button SEL1 for selecting "Program" and a selection button SEL2 for selecting "Machining process" are provided. It is to be noted that on the interface INT3 for setting the energy saving of the second pump 16, the selection button SEL2 for selecting "Machining process" is not provided. When the interfaces INT2 to INT5 start, buttons to be displayed in the highlight HL2 have been selected beforehand and highlighted. However, in a case where the energy saving level is not set in the machining program 41 (in a case where "Default" is displayed in the highlight HL2), "Program" is selected beforehand and highlighted. Then, out of the selection buttons SEL1 and SEL2, when pressing a selection button that has not been selected beforehand is detected on the input interface 21F, such a selected button is highlighted.

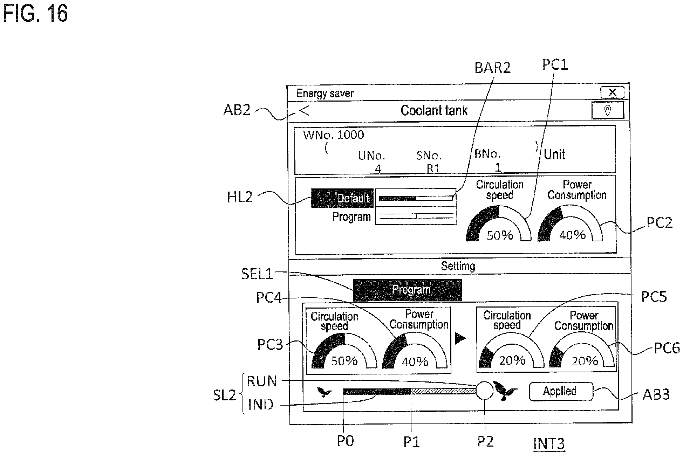

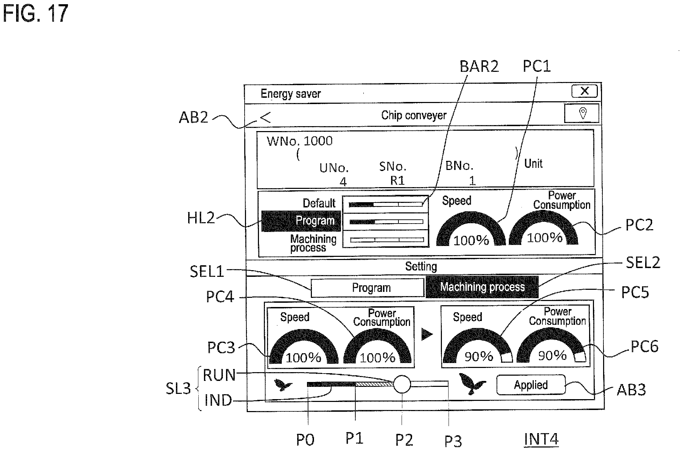

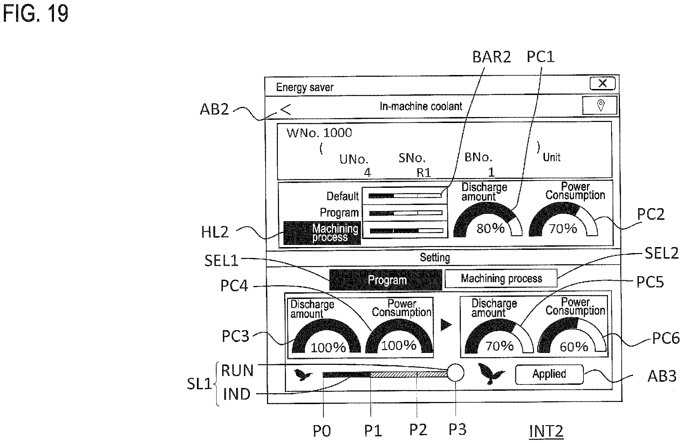

Below the selection buttons SEL1 and SEL2, circular graphs PC3, PC4, PC5, and PC6 are displayed. In the circular graph PC3, the percentage of output of the external device that has been selected by the selection button SEL1 or SEL2 is displayed in principle. In the circular graph PC4, the percentage of power consumption of the external device that has been selected by the selection button SEL1 or SEL2 is displayed in principle. These percentages are the same with the values indicated in the tables T1 to T4 in FIG. 3. However, as illustrated in FIG. 16, when the selection button SEL1 is selected and in a case where the energy saving level is not set in the common unit (or the individual data 47), the setting value of "Default" is displayed. As illustrated in FIG. 17, when the selection button SEL2 is selected and in a case where the energy saving level is not set in the machining unit (or the G500 code), the energy saving level of the common unit (or the individual data 47) is referred to. In a case where the energy saving level of the common unit (or the individual data 47) is set as a value other than the level 0, a setting value in accordance with the energy saving level of the common unit (or the individual data 47) is displayed. In a case where the energy saving level of the common unit (or the individual data 47) is not set, the setting value of "Default" is displayed. In addition, for example, as illustrated in FIG. 19, when the selection button SEL1 is selected in the state of FIG. 15, values corresponding to the energy saving level of the common unit (or the individual data 47) are respectively displayed in the circular graphs PC3 and the PC4, even though the external device is controlled with the energy saving level of the machining unit (or the G500 code).

Any of sliders SL1, SL2, SL3, and SL4 is provided below the circular graphs PC3, PC4, PC5, and PC6. The sliders SL1, SL2, SL3, and SL4 each include an indicator IND for indicating the energy saving level and a runner RUN to be provided at a tip end of the indicator IND. The sliders SL1, SL2, SL3, and SL4 each have divisions of a scale corresponding to the maximum number of the energy saving levels of the first pump 15, the second pump 16, the chip collector 20, and the fan 33, and are configured so that the runner RUN is moveable to only positions of the divisions of the scale. P0 to P5, which are indicated in FIGs. 15 to 18, respectively correspond to the positions of the divisions of the scale. P0 to P5 respectively correspond to levels 0 to 5. A hatched region indicates a movement trajectory that has moved from an initial position of the runner RUN. A region between the position P0 and the runner RUN is actually displayed as an indicator IND.

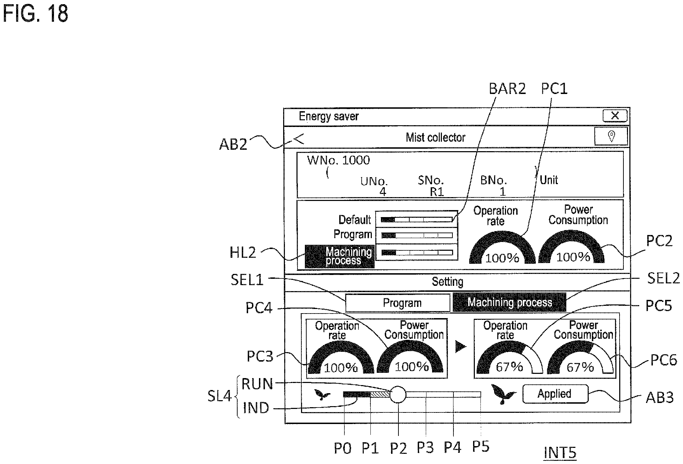

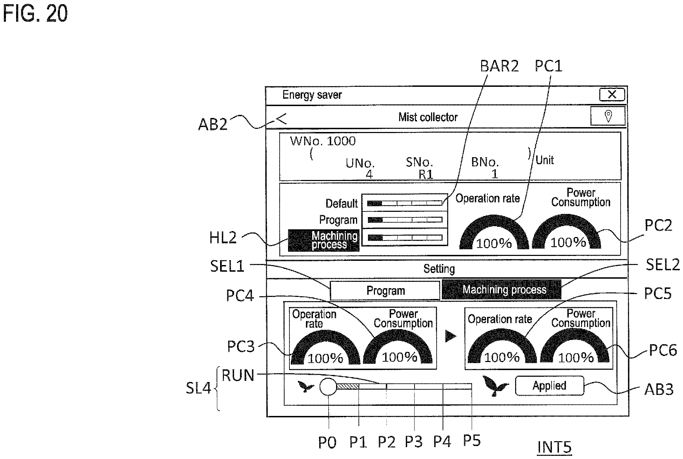

The circular graph PC5 represents the output of the external device corresponding to the energy saving level set by the indicator IND in percentage terms. The circular graph PC6 represents the power consumption of the external device corresponding to the energy saving level set by the indicator IND in percentage terms. These percentages are the same with those illustrated in tables T1 to T4 in FIG. 3. It is to be noted that when the selection button SEL1 is selected and in a case where the position of the runner RUN is set to P0, the setting value of "Default" is displayed. When the selection button SEL2 is selected and in the case where the position of the runner RUN is set to P0, the energy saving level of the common unit (or the individual data 47) is referred to. In a case where the energy saving level of the common unit (or the individual data 47) is set as a value other than the level 0, the setting value in accordance with the energy saving level of the common unit (or the individual data 47) is displayed. In a case where the energy saving level of the common unit (or the individual data 47) is not set, the setting value of "Default" is displayed. FIG. 20 illustrates an example in which the position of the runner RUN is set to P0 from the state of FIG. 18, and thus the setting value in accordance with the energy saving level of the common unit (or the individual data 47) is displayed.

In a state in which the above settings have been made as described above, when an application button AB3 is pressed, the following processing is performed. In a case where the machining program 41 is of an interactive type, the processor 2P, which executes the equipment control program 42, temporarily suspends the processing of step S17 in FIG. 9, and performs processing of writing the energy saving levels that have been set on the sliders SL1, SL2, SL3, and SL4 to the positions corresponding to the selection buttons SEL1 and SEL2 in the machining program 41. Then, the processor 2P, which executes the equipment control program 42, performs steps S14 to S16 again. In a case where a YES determination is made in step S14, the processor 2P performs processing of resuming step S17.

In a case where the machining program 41 is in the EIA/ISO format, when the selection button SEL1 is selected, the processor 2P, which executes the equipment control program 42, temporarily suspends the processing of step S37 in FIG. 11, and performs processing of writing the energy saving levels that have been set on the sliders SL1, SL2, SL3, and SL4 into the individual data 47. When the selection button SEL2 is selected, the processor 2P, which executes the equipment control program 42, temporarily suspends the processing of step S37 in FIG. 11, searches for a row of the T code that is closest from the currently executed program row, and writes the G500 code including the energy saving levels that have been set on the sliders SL1, SL2, SL3, and SL4 into the next row of such a searched row of the T code in the machining program 41 in the EIA/ISO format. The level 0 may be set for the energy saving level of an external device that is not set on any of the sliders SL1, SL2, SL3, and SL4. Then, the processor 2P, which executes the equipment control program 42, performs steps S32 to S36 and S40 again. In a case where a YES determination is made in step S34, the processor 2P performs the processing of resuming step S37. When the processing of step S37 ends, the processor 2P, which executes the equipment control program 42, may write the G501 code immediately into the machining program 41 in the EIA/ISO format before either the next T code or the M30 code, or may not necessarily write the G501 code. In a case where the G501 code is written, the energy saving levels that have been set on the sliders SL1, SL2, SL3, and SL4 are to be set only for the machining process that is being performed when the application button AB3 is pressed. In a case where the G501 code is not written, the energy saving levels that have been set on the sliders SL1, SL2, SL3, and SL4 are to be set for a period between the machining process that is being performed when the application button AB3 is pressed and a machining process immediately before the machining process that is being performed when the application button AB3 is pressed next. Therefore, even though the machining program 41 is of an interactive type or in the EIA/ISO format, receipt of pressing the application button AB3 means receipt of a program application instruction to apply a drive parameter (the energy saving level) to the intended program, and means receipt of a control instruction to control the intended equipment, based on the drive parameter (the energy saving level).

It is to be noted that as illustrated in FIG. 19, in a state in which the energy saving level is set in the machining unit (or the G500 code), even though the setting of the energy saving level of the common unit (or the individual data 47) is changed, the control itself for the external device does not change before and after the suspension, and only the display of the bar graph BAR2 related to "Program" is changed before and after the suspension. As illustrated in FIG. 20, when the energy saving level of the machining unit (or the G500 code) is set at the level 0, the processing is resumed in a state in which the energy saving level of the common unit (or the individual data 47) is applied, and the displays of the highlight HL2 and the bar graph BAR2 are changed, accordingly. Similarly, in a case where the energy saving level of the machining unit (or the G500 code) is originally the level 0 and the energy saving level of the common unit (or the individual data 47) is set at the level 0, the processing is resumed with the default energy saving level applied, and the displays of the highlight HL2 and the bar graph BAR2 are changed, accordingly.

### <Processing Flow in Control Method of Power Consumption of Machine Tool 1>

Next, description will be made with regard to the processing in a control method of the power consumption of the machine tool 1 to be performed by the processor 2P, which executes the equipment setting program 45. FIG. 21 is a flowchart illustrating a processing flow in the control method of the power consumption of the machine tool 1 to be performed by the processor 2P, which executes the equipment setting program 45. In FIG. 21, in step S41, the processor 2P, which executes the equipment setting program 45, performs processing of receiving an input for selecting an intended program to be set, from a plurality of machining programs 41 to be executable in the machine tool 1. Specifically, for example, the processor 2P, which executes the equipment setting program 45, communicates with the equipment control program 42 to acquire the workpiece number WNo. of the machining program 41, which is currently being executed, or acquires the process ID, which is being performed in an existing method, and thus acquires the workpiece number WNo. of the machining program 41, which is currently being executed.

In step S42, the processor 2P, which executes the equipment setting program 45, performs processing of displaying, as an initial power value, the power consumption to be consumed by each of at least one piece of equipment (external device) provided in the machine tool 1, while the machine tool 1 is in operation. This power consumption is intended to mean the electric power consumed when each of the at least one piece of equipment executes an intended program. Specifically, the processor 2P, which executes the equipment setting program 45, performs processing of displaying the energy saving level on the display 2DS, in the bar graph BAR1 on the interface INT1. In step S43, the processor 2P, which executes the equipment setting program 45, performs processing of receiving an input for selecting intended equipment, the power consumption of which is to be changed from the initial power value, from the at least one piece of equipment. Specifically, by receiving pressing the arrow button AB1 on the interface INT 1, the processor 2P, which executes the equipment setting program 45, performs processing of receiving an input for the external device corresponding to the arrow button AB1 as the intended equipment.

In step S44, the processor 2P, which executes the equipment setting program 45, performs processing of displaying an initial output value representing the output of the intended equipment corresponding to the initial power value, by displaying the circular graph PC1 on the interfaces INT2 to INT5, on the display 2DS. Similarly, the processor 2P, which executes the equipment setting program 45, performs processing of displaying the initial power value, by displaying the circular graph PC2 on the interfaces INT2 to INT5, on the display 2DS. In step S45, the processor 2P, which executes the equipment setting program 45, performs processing of receiving an input for selecting at least one machining process from a plurality of machining processes included in the intended program, by receiving pressing the selection button SEL1 or SEL2.

In step S46, the processor 2P, which executes the equipment setting program 45, receives an input of the drive parameter (the energy saving level) for changing the power consumption of the intended equipment, by receiving the positions of the runners RUN of the sliders SL1, SL2, SL3, and SL4 from the input interface 21F. The energy saving level corresponds to each of the values (the second rows of the tables T1 to T4 in FIG. 3) indicating the ratio of the output of the external device in percentage terms when the external device is driven with such power consumption, in a case where the output of the external device is set at 100% when each actuator is driven with the rated power consumption. Therefore, receiving the input of the drive parameter includes receiving an input for selecting, from a plurality of candidate ratios, a ratio of a target output value to a reference value (the output when the intended equipment is driven with the rated power consumption) out of the values each representing the output of the intended equipment. Such a drive parameter denotes, for example, the energy saving level. In step S47, by displaying the circular graphs PC5 and PC6 on the interfaces INT2 to INT5 of the display 2DS, processing of displaying a target power value of the power consumption corresponding to the drive parameter and the target output value representing the output of the intended equipment corresponding to the target power value is performed.

In step S48, the processor 2P, which executes the equipment setting program 45, performs processing of determining whether pressing the application button AB3 has been received. In a case where the pressing the application button AB3 has not been received (No in step S48), the processing returns to step S45. In the present embodiment, receiving the pressing the application button AB3 is intended to mean receiving a program application instruction to apply the drive parameter to the intended program and receiving a control instruction to control the intended equipment, based on the drive parameter.

In a case where the pressing the application button AB3 has been received (No in step S48), which means that the processor 2P, which executes the equipment setting program 45, has performed processing of receiving the program application instruction to apply the drive parameter to the intended program and processing of receiving the control instruction to control the intended equipment, based on the drive parameter. In this situation, in step S49, the processor 2P, which executes the equipment setting program 45, receives the program application instruction, and performs processing of storing a correspondence relationship between the intended equipment and the output of the intended equipment corresponding to the drive parameter or between the intended equipment and the drive parameter in the memory 2M in association with the intended program. More specifically, the processor 2P, which executes the equipment setting program 45, receives the program application instruction, and performs processing of storing the correspondence relationship between the intended equipment and the output of the intended equipment corresponding to the drive parameter or between the intended equipment and the drive parameter in the memory 2M in association with at least one machining process of the intended program.

In step S50, the processor 2P, which executes the equipment control program 42, receives a control instruction, and performs processing of controlling the intended equipment, based on the drive parameter. Controlling the intended equipment includes controlling the intended equipment in at least one machining process, based on the drive parameter. Specifically, the processor 2P, which executes the equipment control program 42, starts the intended program in which the correspondence relationship is associated, and then performs processing of controlling the intended equipment to achieve the target power value of the power consumption corresponding to the drive parameter.

The above interfaces INT1 to INT5 are used by the machining program 41 while being executed on the machine tool 1. This enables the operator to make settings for saving the power consumption, while viewing the operation of the machining program 41 and checking whether the external device is making necessary output with the reduced power consumption.

### <Change of Equipment Setting Data 46 While Machining Program 41 Is Not Running>

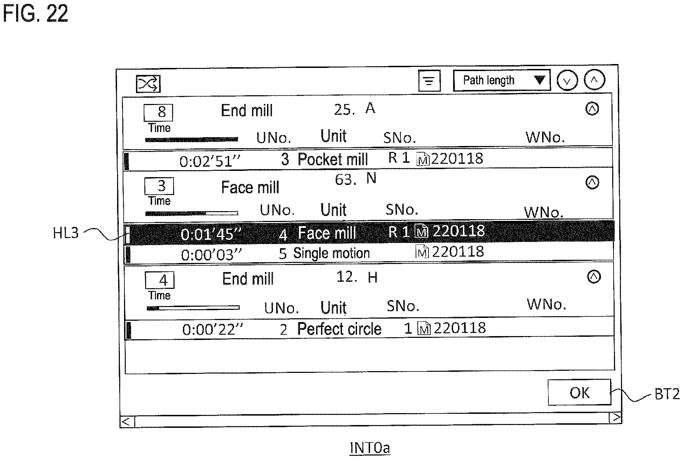

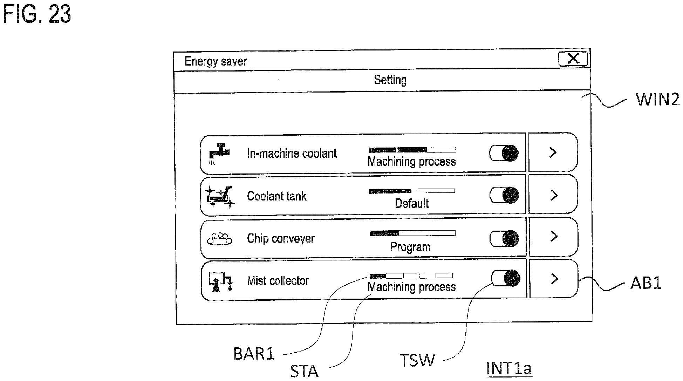

The equipment setting program 45 according to the present embodiment is executable also in an embodiment in which the machining program 41 is not running while the machine tool 1 is in operation. In such a case, after the machining program 41 is selected on the interface as illustrated in FIG. 13, the equipment setting program 45 selects the machining unit in the machining program 41 on an interface INT0a, as illustrated in FIG. 22. It is to be noted that FIG. 22 illustrates an example of an interface in the case of the machining program 41 of an interactive type. On the interface INT0a, the machining units are collectively displayed for every tool, and different machining units are illustrated in different rows. FIG. 4 illustrates an example in which the machining unit having the unit number UNo. 4, which is illustrated in FIG. 5, is selected by clicking or the like, and is displayed in a highlight HL3. It is to be noted that the interface INT0a is an example, and any interface may be applicable, as long as the machining unit is in a selectable mode. In a state in which the machining unit is selected on the interface INT0a, when pressing the OK button BT1 is detected by the input interface 21F, the interface transitions to an interface INT1a, as illustrated in FIG. 23. The interface INT1a is, for example, an interface on which a window WIN1 is omitted from the interface INT1. However, any interface may be applicable, as long as the external device is in a selectable mode. It is to be noted that in the case of the machining program 41 in the EIA/ISO format, for example, the source codes are displayed, a part corresponding to the T code is highlighted and selected, and processing starting with such a selected T code and ending at the next T code can be regarded as a selected machining process.

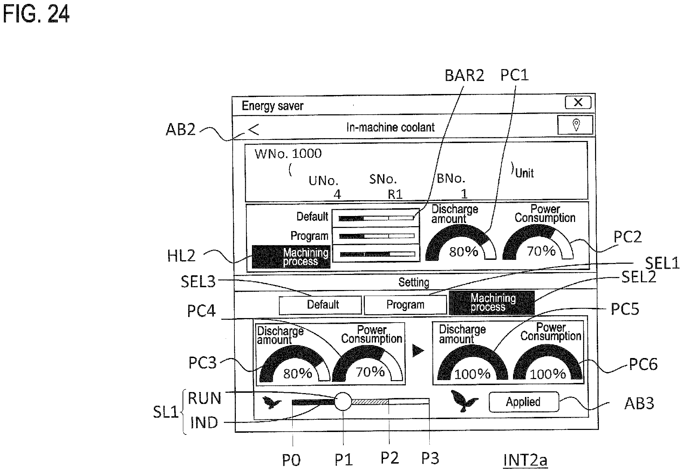

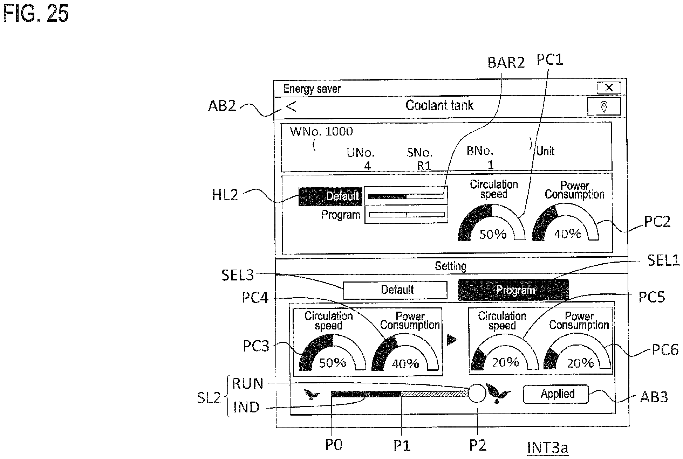

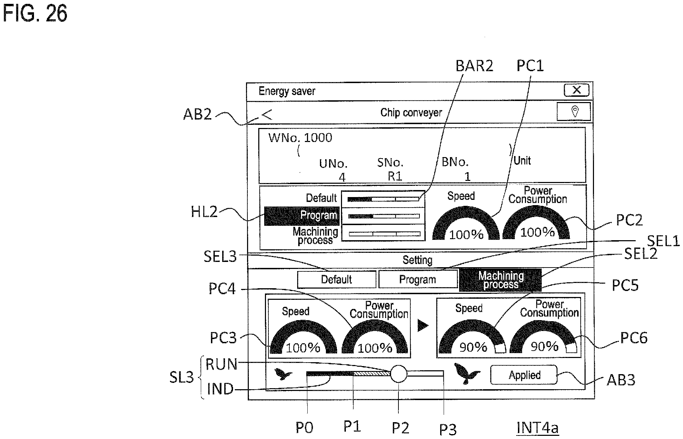

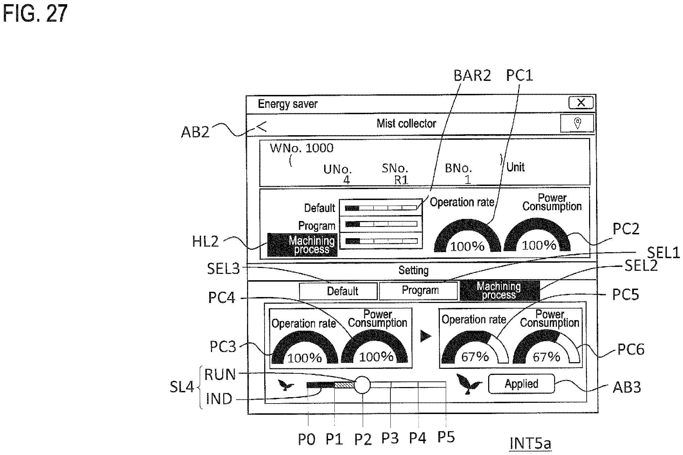

FIGs. 24 to 27 respectively display setting change interfaces INT2a to INT5a of the first pump 15, the second pump 16, the chip collector 20, and the fan 33 of the mist collector 30, each of which is displayed when the arrow button AB1 in FIG. 23 is pressed. In FIGs. 24 to 27, the same reference numerals are applied to the interface items having the same functions with those in FIGs. 15 to 18, and overlapping descriptions will be omitted.

A main difference between the setting change interfaces INT2a to INT5a and the setting change interfaces INT2 to INT5 is that a selection button SEL3 for changing the default energy saving level is provided on the INT2a to INT5a. When the selection button SEL3 is pressed, the output of the external device set in the table T5 of the equipment setting data 46 is displayed in the circular graph PC3 in percentage terms. In the circular graph PC4, the power consumption of the external device set in the table T5 of the equipment setting data 46 is displayed in percentage terms. While the selection button SEL3 is selected, the runners RUN of the sliders SL1, SL2, SL3, and SL4 are restricted not to move to the position P0. While the selection button SEL3 is selected, after the sliders SL1, SL2, SL3, and SL4 are operated, when the application button AB3 is pressed, processing of writing into the table T5 of the equipment setting data 46 is performed. It is to be noted that even though the selection button SEL1 or SEL2 is selected, the processing of writing into the position of the machining program 41 corresponding to the selection button SEL1 or SEL2 is only performed.

Next, the processing flow when the present interfaces INT0a to INT5a are used will be described. In principle, the flow processing is the same as that of FIG. 21. However, the input for selecting one machining process in step S45 is achieved by a combination of selection of the machining unit on the interface INT0a and selection of the selection button SEL1 or SEL2 or a combination of selection of the T code in the case of the machining program 41 in the EIA/ISO format and the selection of the selection button SEL1 or SEL2. Step S50 is achieved by pressing the application button AB3, and then individually calling the equipment control program 42 and executing the machining program 41. For example, when the application button AB3 is pressed in the equipment setting program 45 of the computer 99, the processor 99P, which executes the equipment setting program 45, may perform processing of rewriting the program data of the machining program 41, the equipment setting data 46, and the individual data 47 of the computer 99, transferring these pieces of data to the numerical controller 2, and sending, to the numerical controller 2, a command for starting the equipment control program 42 from the outside. Alternatively, the processor 99P, which executes the equipment setting program 45, may perform only processing of rewriting the program data of the machining program 41 of the computer 99, the equipment setting data 46, and the individual data 47, transferring these pieces of data to the numerical controller 2, starting the equipment control program 42 on the numerical controller 2 again, and after the application button AB3 is pressed, calling the equipment control program 42 individually, and executing the machining program 41. In this manner, in a case where the processing of FIG. 21 is implemented in a plurality of apparatuses (the numerical controller 2 and the computer 99), such a plurality of apparatuses may be collectively referred to as a computer system.

### <Features and Effects of Control Method of Power Consumption of Machine Tool in The Present Embodiment>

The numerical controller 2, the computer 99, the machine tool 1, and the control method of the power consumption of the machine tool 1 in the present embodiment includes displaying, as an initial power value, the power consumption to be consumed by each of at least one piece of equipment provided in the machine tool 1, while the machine tool 1 is in operation, receiving an input for selecting intended equipment, the power consumption of which is to be changed from the initial power value, from the at least one piece of equipment, receiving an input of a drive parameter (the energy saving level) for changing the power consumption of the intended equipment, and controlling the intended equipment, based on the drive parameter. This enables the power consumption to be precisely set for every piece of equipment, and enables precise reduction in the power consumption.

### <Modifications>

The G500 code and the G501 code, which are indicated in FIGs. 7 and 8, are merely examples, and any G code may be applicable, as long as it has not already been reserved or used in any other use application. In addition, instead of the G500 code and the G501 code, an M code that has not already been reserved or used in any other use application may be applicable. Further, the interfaces INTO to INT5 or INTO to INT5a are merely examples of the interface, and any other interface may be applicable, as long as it enables the display and selection functions illustrated in FIG. 21.

In step S45 of FIG. 21 described above, not only at least one machining process is selected by the selection button SEL1 or SEL2 but also a plurality of machining processes may be selected by a check box or the like. Alternatively, a plurality of machining units may be selectable on the interface of FIG. 22, and when the plurality of machining units are selected, a plurality of interfaces INT1 to INT5 or INT 1a to INT5a may be displayed so that a plurality of settings can be made. It is to be noted that in the case of the machining program 41 in the EIA/ISO format, unless the G501 code is set, the G500 code will be set, and the energy saving level of the machining process continuous until the next G500 code is set will be set. Hence, in a case where there are a plurality of machining processes before the next G500 code is set, the plurality of machining processes are to be set inevitably. It is to be noted that also in the machining program 41 of an interactive type, in a state in which the selection button SEL21 is selected and when the application button AB3 is pressed, the energy saving levels that have been set on the sliders SL1, SL2, SL3, and SL4 may be set for a period between the machining process that is being currently performed and the machining process immediately before the machining process that is being performed when the application button AB3 is pressed in the state in which the selection button SEL21 is selected.

Some of the logics or all of the functions of the equipment control program 42 and the equipment setting program 45 may be achieved on a dedicated processor or in an integrated circuit. The equipment control program 42 and the equipment setting program 45 described above may be recorded in a readable storage medium to be removable from the numerical controller 2 and the computer 99 and to be readable by the numerical controller 2 and the computer 99, examples including disks such as a floppy disk, an optical disk, a CD-ROM, and a magnetic disk, an SD card, a USB memory, an external hard disk, without being limited to the memory 2M, which is built in the numerical controller 2 or the computer 99.

In the present application, the term "comprise" and its variations are intended to mean open-ended terms, not excluding any other elements and/or components that are not recited herein. The same applies to the terms "include", "have", and their variations.

Also in the present application, a component suffixed with a term such as "member", "portion", "part", "element", "body", and "structure" is intended to mean that there is a single such component or a plurality of such components.

Also in the present application, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

Also in the present application, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

Also in the present application, the phrase "at least one of A and B" is intended to be interpreted as "only A", "only B", or "both A and B".

Obviously, numerous modifications and variations of the present invention are possible in light of the above teachings. It is therefore to be understood that within the scope of the appended claims, the present invention may be practiced otherwise than as specifically described herein.

## Claims

1. A control method of power consumption of a machine tool, the control method comprising:
displaying, as an initial power value, the power consumption to be consumed by each of at least one piece of equipment provided in the machine tool, while the machine tool is in operation;
receiving an input for selecting intended equipment, the power consumption of which is to be changed from the initial power value, from the at least one piece of equipment;
receiving an input of a drive parameter for changing the power consumption of the intended equipment; and
controlling the intended equipment, based on the drive parameter.

2. The control method according to claim 1, further comprising receiving an input for selecting an intended program to be set from a plurality of machining programs executable in the machine tool, wherein
the power consumption is electric power to be consumed when each of the at least one piece of equipment executes the intended program.

3. The control method according to claim 2, further comprising receiving an input for selecting at least one machining process from a plurality of machining processes included in the intended program,
wherein controlling the intended equipment comprises controlling the intended equipment in the at least one machining process, based on the drive parameter.

4. The control method according to claim 2, further comprising:
receiving a program application instruction to apply the drive parameter to the intended program; and
upon receipt of the program application instruction, storing, in a memory, a correspondence relationship between the intended equipment and an output of the intended equipment corresponding to the drive parameter or between the intended equipment and the drive parameter in association with the intended program.

5. The control method according to claim 3, further comprising:
receiving a program application instruction to apply the drive parameter to the intended program; and
upon receipt of the program application instruction, storing, in a memory, a correspondence relationship between the intended equipment and an output of the intended equipment corresponding to the drive parameter or between the intended equipment and the drive parameter in association with the at least one machining process of the intended program.

6. The control method according to claim 4 or 5, further comprising controlling the intended equipment to achieve a target power value of the power consumption corresponding to the drive parameter, when the intended program associated with the correspondence relationship starts.

7. The control method according to one of claims 1 to 6, further comprising displaying a target power value of the power consumption corresponding to the drive parameter.

8. The control method according to claim 7, further comprising displaying an initial output value representing an output of the intended equipment corresponding to the initial power value and a target output value representing an output of the intended equipment corresponding to the target power value.

9. The control method according to claim 7 or 8, wherein
controlling the intended equipment, based on the drive parameter, comprises:
receiving a control instruction to control the intended equipment, based on the drive parameter; and
upon receipt of the control instruction, controlling the intended equipment, based on the drive parameter.

10. The control method according to one of claims 1 to 9, wherein
receiving the input of the drive parameter comprises
receiving an input for selecting, from a plurality of candidate ratios, a ratio of the target output value to a reference value out of values each representing an output of the intended equipment.

11. The control method according to one of claims 1 to 10, wherein the at least one piece of equipment comprises at least one of:
a first actuator configured to drive a pump for supplying a nozzle of the machine tool with a coolant;
a second actuator configured to drive a pump for supplying a heat exchanger with the coolant reserved in a coolant tank;
a third actuator configured to drive a chip conveyor of the machine tool; and
a fourth actuator configured to drive a fan for discharging mist accumulated in a machine body of the machine tool.

12. The control method according to claim 11, wherein a value representing an output of the intended equipment comprises one of:
a discharge amount per unit time of the coolant obtained from either an operation frequency or a rotational speed of the first actuator;
a supply amount per unit time of the coolant obtained from either an operation frequency or a rotational speed of the second actuator;
a belt speed of the chip conveyor; and
a working period of the fourth actuator per unit time, or either an operation frequency or a rotational speed of the fourth actuator.

13. A numerical controller comprises a means for performing the control method according to one of claims 1 to 12.

14. A machine tool comprising:
the numerical controller according to claim 13;
an input interface configured to receive the input for selecting the intended equipment, and to receive the input of the drive parameter;
a display configured to display the initial power value; and
the at least one piece of equipment.

15. A program comprising an instruction to cause a hardware processor to perform processing of the control method according to one of claims 1 to 12, while the hardware processor is in operation.

16. A computer-readable storage medium for causing a hardware processor to perform processing of the control method according to one of claims 1 to 12, while the hardware processor is in operation.
